# EUROPEAN PATENT APPLICATION

(11) **EP 3 604 234 A1**
(43) Date of publication of application: **05.02.2020**
(21) Application number: 18187117.9
(22) Date of filing: 02.08.2018
(51) Int. Cl.: C02F 1/32, C02F 1/28, C02F 1/72, C22B 3/24, C22B 3/44, C02F 103/16, C02F 103/10, C02F 101/18, C02F 101/20, C02F 1/66, C02F 1/00

(54) **REMOVAL OF STABLE METAL-CYANIDE COMPLEXES AND METALLIC IONS FROM WATER EFFLUENT**

(71) Applicant: SOLVAY SA, 1120 Brussels (BE)
(72) Inventor: BRUHA, Alain, Georges, 1050 Brussels (BE); DEBORTOLI, Romain, 5660 Couvin (BE); DELPLANCHE, Thierry, 1435 Mont-St-Guibert (BE)
(74) Representative: Vande Gucht, Anne

(57) **Abstract**

A process for treating a water effluent, preferably originating from a ore mining process, containing cyanide, metallic ions and stable metal-cyanide complexes having a stability constant K characterized by a logK at 25°C greater than 20, such as one or more cyanide complexes comprising iron, cobalt, nickel, and/or copper, including two main steps: irradiating with UV light in the presence of a peroxygen, preferably comprising H₂O₂, to form an irradiated effluent, and contacting the irradiated effluent with a solid adsorbent comprising apatite to form a treated effluent. The irradiating step is carried out under alkaline pH with UV light having a wavelength from 200 to 375 nm, preferably UV-C light from 200 to 290 nm, for photo-disassociation of the complexes and forming hydroxyl radicals. The solid adsorbent preferably comprises a synthetic hydroxyapatite, preferably calcium-deficient. The synthetic hydroxyapatite may be a composite made with an additive which preferably contains activated carbon and/or iron.

## Description

### CROSS-REFERENCE TO RELATED APPLICATIONS

Not applicable

### TECHNICAL FIELD

The invention relates to a process for treating an effluent contaminated by metallic ions and/or stable metal-cyanide complexes, particularly a water effluent generated by an ore mining process.

### BACKGROUND ART

Cyanidation is a process used in the mining industry where metals are leached from ores into a weak solution of cyanide, generally sodium cyanide. Once the metals are leached from the ores, the metals are precipitated and separated from the cyanide solution. Following dissolutions of the metals in the cyanide solution, the process further includes recovery of the metals by cementation, activated carbon or ion exchange resin. A relatively large portion of the cyanide solution is recirculated back to the cyanidation process to take advantage of the leaching potential for the metals. It is, however, necessary to purge a portion of this loaded solution to avoid the build-up of unwanted metals. Eventually the purge is sent to a tailings pond or other holding area for removal of metals and cyanide prior to discharge. The purge, pond residues and pond supernate have high concentration of free cyanide as well as metallic cyanide complexes, which give them a high degree of toxicity.

Cyanides are harmful for the environment especially in a free, uncomplexed form. The problems posed by the impact of heavy metals in the environment are well known. Because of the cyanide content and its high concentration of metallic compounds, the purge and holding pond residues can present a potential environmental hazard for the mining industry. It is therefore common to treat these various wastes from ore processing processes in order to remove cyanides and metallic contaminants.

As used herein, "cyanide" refers to free cyanide (CN, HCN) and complexed cyanides. Cyanides are determined by standard methods. Cyanide may be present in several forms in waste and is classified according to the difficulty of the digestion step in the calorimetric determination method prescribed by the EPA:
1. Free cyanide CN, HCN;
2. Simple cyanide compounds, including the readily soluble NaCN, KCN, Ca(CN)₂, Hg(CN)₂, and relatively insoluble, including Zn(CN)₂, CuCN, Ni(CN)₂ and AgCN;
3. Weak metal-cyanides, including Zn(CN)₄, Cd(CN)₃ and Cd(CN)₄;
4. Moderately strong cyanides, including Cu(CN)₂, Cu(CN)₃, Ni(CN)₄ and Ag(CN)₂; and
5. Strong metal-cyanides, such as Fe^{II}(CN)₆, Fe^{III}(CN)₆, Co(CN)₆, Au(CN)₂ and Hg(CN)₄.

The metal-cyanide complexes can be characterized in strength by a stability constant in terms of log K, where K is the constant for the equilibrium between the metal-cyanide complex and the free metal ion and cyanide ion (for ferrocyanide for example: K = [(Fe(CN)₆)⁴⁻]/[Fe²⁺]/[CN⁻]⁶) - see **TABLE 1** provided in Thomas & Rohrer, Themo Fisher Scientific Inc, Application update 147 "Direct Determination of Metal Cyanides by Ion Chromatography with UV Absorbance Detection" available online at https://assets.thermofisher.com/TFS-Assets/CMD/Application-Notes/AU-147-IC-Metal-Cyanides-AU71360-EN.pdf.

**TABLE 1**

| Metal-cyanide complexes | Stability Constant (log K at 25°C) | Type of complex |
|---|---|---|
| [Co(CN)₆]³⁻ | 64 | strong |
| [Fe(CN)₆]³⁻ | 43.6 | strong |
| [Pd(CN)₄]²⁻ | 42.4 | strong |
| [Pt(CN)₄]²⁻ | 40 | strong |
| [Hg(CN)₄]²⁻ | 39 | strong |
| [Au(CN)₂]⁻ | 37 | strong |
| [Fe(CN)₆]⁴⁻ | 35.4 | strong |
| [Ni(CN)₄]²⁻ | 30.2 | moderately strong |
| [Cu(CN)₄]³⁻ | 23.1 | moderately strong |
| [Cu(CN)₃]²⁻ | n/a* | moderately strong |
| [Ag(CN)₂]⁻ | 20.5 | moderately strong |
| [Zn(CN)₄]²⁻ | 19.6 | weak |
| [Cd(CN)₄]²⁻ | 17.9 | weak |

| | | |
|---|---|---|
| * n/a : not available | | |

Methods for treating cyanide-containing wastes can be divided into two groups: methods that destroy cyanide by breaking the ion to form simpler, non-hazardous compounds (such as carbon dioxide and nitrogen gas) by an oxidation or electrolytic decomposition, and methods that reduce the volume of cyanide waste by evaporation, reverse osmosis or ion exchange.

Methods for removing cyanide by destruction include reaction with oxidants such as sulfur dioxide, hydrogen peroxide, sodium hypochlorite and chlorine in various forms, such as under alkaline pH conditions (alkaline chlorination) with the addition of sodium hypochlorite, or through the addition of ozone (ozonation) or hydrogen peroxide (peroxidation) at elevated temperature and pressure. The oxidation using hydrogen peroxide (H₂O₂) can be slow, taking days in some processes depending on the forms of cyanides present in the effluent being treating. The time necessary for oxidation with H₂O₂ can be decreased by using a copper catalyst - see for example U.S. Patent No. 3617567**.** These processes involve handling large volumes of chemicals and generally are not effective on wastes that contain complexed cyanides, such as the cyanides present in purges generated by many mining and metallurgic processes. Other techniques available for removing cyanide by destruction include reaction with metal salts such as copper sulfate, ferrous and ferric salts, and the like, singly or in combination. See, for example, U.S. Patent Nos. 5015396**;** 4622149**;** 4851129 **and** 4312760**.**

Electrolytic decomposition involves passing an electric current through the cyanide solution to break the cyanide ion. The process is effective in the destruction of free and complexed forms of cyanide. Electrolytic decomposition, however, is a very expensive process because of the large amounts of electrical energy consumed and is applicable only where the cyanide concentrations are at a relatively high level. High capital equipment costs are also associated with the process.

Oxidation is generally the most used in the destruction of cyanides. The process generally is effective in destroying free cyanide and some cyanide complexes. Free cyanide in solution is quite amenable to destruction by oxidation methods. Destruction of complexed forms of cyanide (i.e., "metal-cyanide complexes" or "complexed cyanide") in solution by means of oxidation is highly dependent on the complexing ion associated with the cyanide radical. The relative stability among cyanide complexes varies depending on the complexing ion that is bound to the cyanide radical. It is known that oxidation methods using chlorine or an oxidant like H₂O₂ are not effective in destroying these strong metal-cyanides in group 5 identified above.

The detoxification of a water effluent comprising free cyanide and metal-cyanide complexes can proceed as follows: oxidizing free cyanide to cyanate, destroying the weak and moderately strong complexes such as those with zinc, copper and silver, precipitating these metals as hydroxides, and precipitating the strong iron(II) cyanide complex as a heavy metal ferrocyanide or iron ferrocyanide.

As an alternative, the detoxification of a water effluent comprising free cyanide and iron-cyanide complexes can proceed by removing cyanide from solution and into solid tailings as an iron ferrocyanide precipitate. This can be achieved for example by ferrous sulfate addition. The precipitate that forms in the reaction between excess FeSO₄ and CN⁻ comprises mainly insoluble Prussian blue, Fe4[Fe(CN)₆]³. The Prussian blue precipitate is stable over a pH range of 1 to 7, but is unstable in alkaline solution, decomposing rapidly to form Fe(CN₆)⁴⁻ in solution. It forms various insoluble iron oxides, Fe₂0₃.nH₂O (n = 1-3), at pH values above 7. See M.D. Adams, 1992, Journal of South African Institute of Mining and Metallurgy, vol 92, no. 1, pp. 17-25**.** In this technique, the addition of FeSO₄ can generate stable ferrocyanide anions at a pH>7 that can be found in soluble form in an alkaline effluent. Such presence can create issues in ultimate disposal of the effluent as the total cyanide content may exceed the regulation limit even though the free cyanide content may be below its acceptable limit. Moreover stable ferrocyanide anions may pose problems in downstream processes such as ion exchange resin or activated carbon.

For methods for treating metals-containing wastes, numerous industrial processes release liquid or gaseous effluents that are heavily loaded with heavy metals, in particular heavy metal soluble salts, such as cationic form salts. The expression "heavy metals" is understood to mean metals whose density is at least equal to 5 g/cm³, and also beryllium, arsenic, selenium, and antimony, in accordance with the generally accepted definition (Tchounwou, P. B., Yedjou, C. G., Patlolla, A. K., & Sutton, D. J. (2012). Heavy Metals Toxicity and the Environment. EXS, 101, p. 133-168. http://doi.org/10.1007/978-3-7643-8340-4_6). Lead or cadmium are particularly significant examples, given their harmful effect on the human body. Nickel is another example thereof due to its allergenic effect.

Hydroxyapatite is an adsorbent which can be used for trapping and immobilizing metals within its structure from contaminated effluents, particularly aqueous effluents. See, for example, WO 2015/173437 by Solvay SA. Hydroxyapatite based adsorption can be used in lieu of ion exchange resins. Cationic species such as zinc, copper, cadmium, and lead are preferentially trapped over anionic species such as arsenate (As0₄), selenate (Se0₄), or molybdate (Mo0₄).

In the context of a cyanide-containing water effluent from an ore processing plant, while certain metals like cadmium, lead, chromium, zinc in the forms of cations were removed very efficiently with a hydroxyapatite adsorbent, it was observed that certain metals such as cobalt, iron, nickel, and copper present in such water effluent were not removed efficiently, even though they are generally well captured by such hydroxyapatite. Even when their removal efficiency is generally very high - well above 90% - when these metals are in the form of cations, it was found that metals in the water effluent form metal-cyanide complexes that were not readily captured by this adsorbent with efficiency of less than 50%. Since the adsorption typically takes place at an alkaline pH, it is premised that these adsorption-resilient metal-cyanide complexes are in the form of ions in the water effluent.

Additionally, the metal-cyanide complexes that were not readily captured by this adsorbent were found to be quite stable and resistant to oxidation methods such as those described above. These metal- cyanide complexes which seem to be less amenable to hydroxyapatite adsorption have a stability constant K characterized by a logK at 25°C greater than 20, preferably greater than 30, more preferably greater than 35, where K is the constant for the equilibrium between the metal-cyanide complex and the free metal ion and cyanide ion.

Without wishing to be bound by this theory, it is thought that because these metal-cyanide ions present in the water effluent are negatively charged and are quite stable under alkaline conditions, the hydroxyapatite in the solid adsorbent was much less efficient in capturing these anionic complexes.

Hence in order to use effectively a metal removal technique using an hydroxyapatite-based adsorbent from a water effluent containing cyanides in free and complexed forms, there is a need to destruct these stable metal-cyanide anions by removing away the cyanide ligands from the complexes and recover metallic ions (central ions in these complexes) that are in a form (cations) which is more readily amenable to adsorption by hydroxyapatite.

Heavy metals are not the only priority of the aqueous environment in terms of legislation and environmental impact; regulations also address many organic compounds, such as polycyclic aromatic hydrocarbons (PAHs), phenolic compounds, and pharmaceutical residues. In many industries wastewater such as petrochemical industry, pesticides and insecticides, phenolic compounds posed a big threat to aquatic system due to their toxicity and poor biodegradability. Petroleum refinery wastewater usually contains high COD due to the presence of polycyclic aromatic hydrocarbons, phenolic compounds and their derivatives.

The United States Environmental Protection Agency and the European Commission have listed PAHs as priority pollutants with the objective of reducing the release of these compounds to the environment. The widespread occurrence of PAHs is largely due to their formation and release in all processes of incomplete combustion of organic materials. PAHs are particularly found in some industrial water originating from heat treatments (such as from incomplete combustion and pyrolysis of fossil fuels or wood and from the release of petroleum products, wet scrubbers or pyrometallurgy process). PAHs are also found in coal tar, crude oil, creosote and roofing tar and a few are used in medicine or to make dyes, plastics, and pesticides. There are thousands of PAH compounds in the environment but in practice PAH analysis is restricted to a few compounds-mostly the 16 priority compounds (Naphthalene, Acenaphthylene, Acenaphthene, Fluorene, Phenanthrene, Anthracene, Fluoranthene, Pyrene, Benz[a]anthracene, Chrysene, Benzo[b]fluoranthene, Benzo[k]fluoranthene, Benzo[a]pyrene, Indeno[1,2,3-cd]pyrene, Dibenzo[a,h]anthracene and Benzo[ghi]perylene) listed by US EPA as potentially toxic.

There is a need for a process for treatment of water effluent containing both metal ions and metal cyanide complexes and optionally also organics which includes using an hydroxyapatite based adsorbent effective on water effluents to remove cyanide and metal contaminants and optionally also organic contaminants. This is also applicable to water purification in general to remove water-soluble metallic ions as well as anionic metal-cyanide complexes having a stability constant K characterized by a logK at 25°C greater than 20, preferably greater than 30, more preferably greater than 35, where K is the constant for the equilibrium between the metal-cyanide complex and the free metal ion and cyanide ion. The stable metal-cyanide complexes are generally selected from the group consisting of moderately strong metal-cyanide complexes ('group 4' provided above) and strong metal-cyanide complexes ('group 5' provided above) - see **TABLE 1.**

Hence, there is still a need to develop a method for treatment of a water effluent from the ore mining industry to produce a treated water that is suitable for discharge according to environmental regulations.

Accordingly, it is an object herein to provide methods for treatment of cyanide-containing wastewater, particularly of water effluent containing metallic ions and stable metal-cyanide complexes in the form of soluble anions and optionally also organic contaminants (e.g., PAHs, phenolic compounds, naphtol and derivatives).

It is another object herein to provide a method for removal from a water effluent, such as a liquid purge/effluent from a mining / metallurgy operation, of metallic ions and stable metal-cyanide complexes in the form of anions, which includes the destruction of metal-cyanide complexes having a stability constant K characterized by a logK at 25°C greater than 20, preferably greater than 30, more preferably greater than 35 (where K is the constant for the equilibrium between the metal-cyanide complex and the free metal ion and cyanide ion) and also the removal of metallic ions and optionally also organic contaminants by contact by a solid adsorbent containing apatite.

### SUMMARY OF INVENTION

Accordingly, one aspect of the present invention relates to a process for treating a water effluent, preferably originating from a ore mining process, containing cyanide, metallic ions and metal-cyanide complexes having a stability constant K characterized by a logK at 25°C greater than 20, preferably greater than 30, more preferably greater than 35, said method comprising:
- irradiating the water effluent at a pH greater than 7.0 with ultraviolet light in the presence of a peroxygen at a selected wavelength to form an irradiated effluent, wherein at least one of said metal-cyanide complexes undergoes photo-dissociation and liberates free cyanide from the complex in order for the free cyanide to be converted to cyanate;
   - contacting the irradiated effluent with a solid adsorbent comprising apatite to remove from the irradiated effluent at least part of said metallic ions to form a treated effluent; and
   - separating the treated effluent from the solid adsorbent.

In the logK, K is the constant for the equilibrium between the metal-cyanide complex and the free metal ion and cyanide ion

The at least one metal-cyanide complex which undergoes photo-dissociation may contain a metal in the complex selected from the group consisting of Fe(II), Fe(III), Co(II), Ni(II), Cu(I), Cu(II), and Hg(II), preferably selected from the group consisting of Fe(II), Fe(III), Co(II), Cu(I), Cu(II), and Ni(II).

The metal-cyanide complex which undergoes photo-dissociation may comprise a complex selected from the group consisting of hexacyanoferrate(II), hexacyanoferrate(III), hexacyanocobaltate(III), tetracyanonickelate(II), tetracyanocuprate(II), and combinations thereof.

The solid adsorbent preferably comprises a calcium-deficient hydroxyapatite with a Ca/P ratio more than 1.5 and less than 1.67, preferably wherein the calcium-deficient hydroxyapatite is synthetically made.

The solid adsorbent may comprise a synthetic hydroxyapatite composite, said synthetic hydroxyapatite composite comprising a hydroxyapatite and at least one additive which is present during the hydroxyapatite synthesis. The at least one additive in the synthetic hydroxyapatite composite is embedded or incorporated into or coated onto the hydroxyapatite. The at least one additive preferably comprises at least one activated carbon, iron (such as in the form of metal, salt, oxide, oxyhydroxide, or hydroxide), or combinations thereof.

### BRIEF DESCRIPTION OF FIGURES

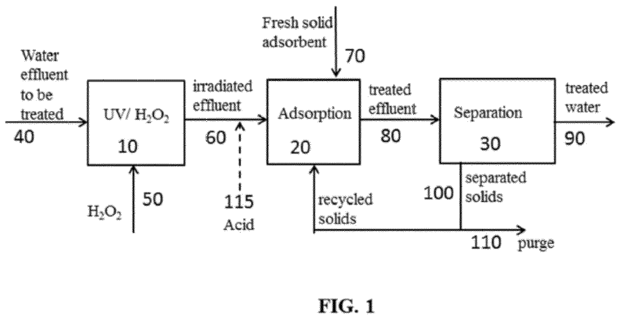

**FIG. 1** is a diagram of a process for treating a water effluent, preferably originating from an ore mining process, containing cyanide, metallic ions and metal-cyanide complexes composite, comprising a UV/H₂O₂ treatment step, an adsorption step and a separation step.

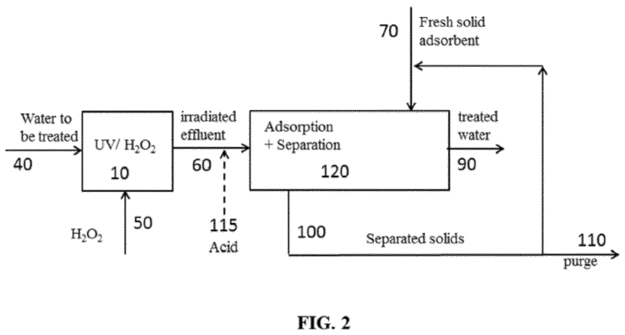

**FIG. 2** represents another diagram of a process according to the invention for treating a water effluent originating from an ore mining process, containing cyanide, metallic ions and stable metal-cyanide complexes, comprising a UV/H₂O₂ treatment step, and separately a combined adsorption / solids separation step.

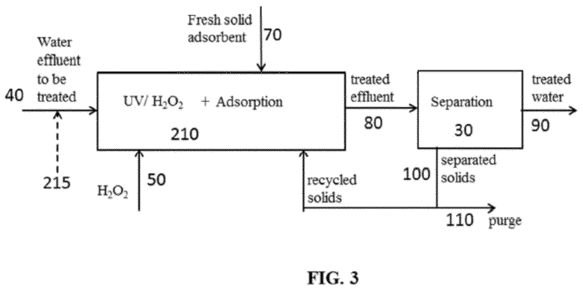

**FIG. 3** represents another diagram of a process according to the invention for treating a water effluent originating from an ore mining process, containing cyanide, metallic ions and stable metal-cyanide complexes, comprising a UV/H₂O₂ treatment step combined with an adsorption step (for metals/organics removal) carried out into one combined unit and a separation step (for solids removal).

### DEFINITIONS

"Fresh" adsorbent denotes a material which has not been in contact with contaminants, whereas "spent" adsorbent denotes a material which has already been in contact with contaminants.

As used herein, the terms "% by weight", "wt%", "wt. %", "weight percentage", or "percentage by weight" are used interchangeably.

As used herein, the term "dry matter" refers to a material which has been subjected to drying at a temperature of 105°C for at least 1 hour.

As used herein, the BET specific surface area is determined by gas adsorption on a Micromeritics ASAP2020 machine. The measurement is carried out using nitrogen as adsorbent gas at 77°K via the volumetric method, according to the ISO 9277: 2010 standard (Determination of the specific surface area of solids by gas adsorption - BET method). The BET specific surface area is calculated in a relative pressure (P/P0) range varying from around 0.05 to 0.20.

In the present specification, the choice of an element from a group of elements also explicitly describes :
- the choice of two or the choice of several elements from the group,
- the choice of an element from a subgroup of elements consisting of the group of elements from which one or more elements have been removed.

In addition, it should be understood that the elements and/or the characteristics of a composition, a method, a process or a use, described in the present specification, can be combined in all ways possible with the other elements and/or characteristics of the composition, method, process, or use, explicitly or implicitly, this being without departing from the context of the present specification.

In the passages of the present specification that will follow, various embodiments or items of implementation are defined in greater detail. Each embodiment or item of implementation thus defined can be combined with another embodiment or with another item of implementation, this being for each mode or item unless otherwise indicated or clearly incompatible when the range of the same parameter of value is not connected. In particular, any variant indicated as being preferred or advantageous can be combined with another variant or with the other variants indicated as being preferred or advantageous.

In the present specification, the description of a range of values for a variable, defined by a bottom limit, or a top limit, or by a bottom limit and a top limit, also comprises the embodiments in which the variable is chosen, respectively, within the value range : excluding the bottom limit, or excluding the top limit, or excluding the bottom limit and the top limit.

In the present specification, the description of several successive ranges of values for the same variable also comprises the description of embodiments where the variable is chosen in any other intermediate range included in the successive ranges. Thus, for example, when it is indicated that "the magnitude X is generally at least 10, advantageously at least 15", the present description also describes the embodiment where : "the magnitude X is at least 11", or also the embodiment where : "the magnitude X is at least 13.74", etc.; 11 or 13.74 being values included between 10 and 15.

The term "comprising" includes "consisting essentially of' and also "consisting of'.

In the present specification, the use of "a" in the singular also comprises the plural ("some"), and vice versa, unless the context clearly indicates the contrary. By way of example, "a mineral" denotes one mineral or more than one mineral.

If the term "approximately" or "about" is used before a quantitative value, this corresponds to a variation of ± 10 % of the nominal quantitative value, unless otherwise indicated.

### DETAILED DESCRIPTION OF PREFERRED EMBODIMENTS

One embodiment according to the present invention relates to a process for treating a water effluent, preferably originating from an ore processing or metallurgy process, containing cyanide, metallic ions and stable metal-cyanide complexes having a stability constant K characterized by a logK at 25°C greater than 20, preferably greater than 30, more preferably greater than 35, where K is the constant for the equilibrium between the metal-cyanide complex and the free metal ion and cyanide ion. The water effluent may further comprise organics.

Such process for treating such water effluent includes two main steps:
- UV peroxidation: irradiation of the water effluent with ultraviolet light in the presence of a peroxygen to form an irradiated effluent, and
- Adsorption: contacting the irradiated effluent with a solid adsorbent comprising apatite to form a treated effluent.
When the peroxygen comprisses H₂O₂, the first step may be termed for simplification " UV/H₂O₂ treatment".

Such process for treating the water effluent generally includes a separation step to remove solids (such as precipitated material and spent adsorbent) from the treated effluent.

The separation of the treated effluent preferably includes settling.

The separating may include adding a flocculant to the treated effluent before or during settling.

### PEROXIDATION STEP WITH UV IRRADIATION

The first step in the present invention relates to the use of UV irradiation in the presence of a peroxygen for removing at least a portion of cyanide contaminants, preferably stable metal-cyanide complexes having a stability constant K characterized by a logK at 25°C greater than 20, preferably greater than 30, more preferably greater than 35, where K is the constant for the equilibrium between the metal-cyanide complex and the free metal ion and cyanide ion. When the peroxygen comprises H₂O₂, this step may be referred to as "UV/H₂O₂ treatment".

The stable metal-cyanide complexes are generally selected from the group consisting of moderately strong metal-cyanide complexes ('group 4' provided above) and strong metal-cyanide complexes ('group 5' provided above). The stable metal-cyanide complexes are generally selected from the group consisting of [Co(CN)₆]³⁻, [Fe(CN)₆]³⁻, [Hg(CN)₄]²⁻, [Fe(CN)₆]⁴⁻, [Fe(CN)₆]⁴⁻, [Ni(CN)₄]²⁻, [Cu(CN)₄]³⁻, [Cu(CN)₃]³⁻, and combinations thereof.

The first step in the present invention comprises irradiating the water effluent at a alkaline pH greater than 7, preferably greater than 8.0, with ultraviolet light in the presence of a peroxygen at a selected wavelength to form an irradiated effluent, wherein at least one of said metal-cyanide complexes undergoes photo-dissociation and liberates free cyanide from the complex in order for the free cyanide to be converted to cyanate and for the metal from the complex to be converted to an hydroxide form.

The at least one metal-cyanide complex which undergoes photo-dissociation during the UV irradiation step with the peroxygen contains a metal in the complex selected from the group consisting of Fe(II), Fe(III), Co(II), Ni(II), Cu(I), Cu(II), and Hg(II), preferably selected from the group consisting of Fe(II), Fe(III), Co(II), Cu(II), and Ni(II).

The metal-cyanide complex which undergoes photo-dissociation during the UV irradiation step with the peroxygen may include a complex selected from the group consisting of [Co(CN)₆]³⁻,[Fe(CN)₆]³⁻, [Fe(CN)₆]⁴⁻, [Fe(CN)₆]⁴⁻, [Ni(CN)₄]²⁻, [Cu(CN)₄]³⁻, [Cu(CN)₃]²⁻, and combinations thereof; preferably selected from the group consisting of hexacyanoferrate(II), hexacyanoferrate(III), hexacyanocobaltate(III), tetracyanocuprate(II), tetracyanonickelate(II), and combinations thereof.

The pH during the irradiation step is greater than 7, or > 7 and up to 11, preferably from 8 to 11, more preferably from 8.5 to 10.5, yet more preferably from 9 to 10.5, even more preferably from 9.5 to 10.5, yet even more preferably from 10 to 10.5.

The pH is generally selected so that no or little HCN gas is liberated from the water effluent that is irradiated. For that reason, it may be preferable to select a pH equal to or greater amount of 8.5, preferably at least 9.

If the water effluent to be treated is not at a pH within the preferred pH range for the irradiation step (that is to say too acidic for the avoidance of HCN volatilisation, and preferably at a pH less than 8.5), an optional alkali may be added to increase the pH. Suitable alkali may include NaOH, KOH, Ca(OH)₂ and/or a carbonate solution.

The irradiating with ultraviolet light is carried out for at least 4 minutes, or at least 5 minutes, and/or at most 120 min, or at most 90 min, or at most 75 min, or at most 60 min.

During irradiating, the ultraviolet light has a wavelength in the region from 200 to 375 nm, preferably from 200 to 350 nm, more preferably from 200 to 300 nm, for the stable metal-cyanide complexes to undergo photo-disassociation and for the peroxygen to form hydroxyl radicals.

The ultraviolet lamp preferably emits UV-C light.

The irradiating with ultraviolet light is carried out with a Hg lamp with a minimum electric rating of 8 W. The term "pressure" is referred to the mercury pressure present in the lamps. Low-pressure lamps operate with mercury vapor pressure ranging from about 100 to 1000 Pa; a buffer gas supplements the mercury vapor. Medium-pressure lamps operate with mercury vapor pressure of approximately 10 kPa, which enables this type of lamp to reach electrical power levels 100 times higher than low-pressure lamps, i.e. several tens of W/cm. Low and high pressure lamps are monochromatic (254 nm) and medium pressure lamps are polychromatic. For a low pressure (LP) Hg lamp, the electric rating may be from 8 W to 100 W. Suitable Hg lamps include standard output LP Hg lamps - popularly used UV lamp, whose electric rating is typically 25W, 50W, 65W, or 95W; high output LP Hg lamps, whose electric rating is typically 200W, 250W, or 400W; or ultra high output LP class lamps, whose electric rating is typically 400W.

The selection of the wavelength to use for the UV/H₂O₂ treatment with the Hg lamp should be done to favor decomposition of H₂O₂ into hydroxyl radical OH^{•} and for the cyanide complexes to be photo-dissociated.

The irradiating step with ultraviolet light may further form particles of metal hydroxides under alkaline condition with the metal liberated from said metal-cyanide complex. The process may further include removing said particles of metal hydroxides from the treated effluent in the separation where the solid adsorbent is separated or removing said particles of metal hydroxides from the irradiated effluent before the contacting step with the solid adsorbent.

The conditions for the irradiation step include a temperature from 0°C to about 60°C, preferably from 0°C to about 40°C, more preferably from 15°C to about 25°C. The conditions for the adsorption step still more preferably include ambient temperature and atmospheric pressure of the location where the process is operated.

The peroxygen used during the irradiating step comprises or consists of H₂O₂.

H₂O₂ may be in the form of a concentrated H₂O₂ aqueous solution, such as >20 up to 30 wt% H₂O₂, preferably about 30 wt% H₂O₂, or a diluted solution comprising from 1 wt% to 20 wt% H₂O₂.

H₂O₂ is used in a molar ratio of at least 2:1, preferably at least 5:1, more preferably at least 10:1, compared to total cyanide content in the effluent, that is to say, the cyanide which is free and which can be liberated from all metal-cyanide complexes during UV peroxidation. For example, if the water effluent contains weak metal-cyanide complexes (such as those belonging to 'group 3'), the cyanide ligand that would be liberated from these weak complexes also need to be taken into account when estimating the amount of H₂O₂ to add to use the H₂O₂:CN ratio equal to or greater than the minimum H₂O₂:CN molar ratio. One can measure the total amount of cyanide in an effluent sample to do this estimation of how much H₂O₂ to add for this UV peroxidation. The amount of H₂O₂ should be sufficient to transform all cyanides (free and liberated ligands) to cyanate and also to oxidize cyanate to N₂ and CO₂.

The total quantity of H₂O₂ may be added to the UV/H₂O₂ treatment at once to satisfy the desired H₂O₂:CN molar ratio, or H₂O₂:CN may be added in two or more portions after several time intervals, such as time 0, time=15 min and times =30 min, or may be added continuously or continually to the UV/H₂O₂ treatment until the total quantity of H₂O₂ (necessary to transform all cyanides -free and liberated ligands- to cyanate and also to oxidize cyanate to N₂ and CO₂) is delivered to the UV/H₂O₂ treatment.

The H₂O₂ may be injected periodically into a circulation loop hydraulically connected to a photoreactor where the irradiation takes place or to a tank in such a circulation loop in order for the H₂O₂ content in the water effluent to be treated to be from 10 to 1,000 ppm, preferably from 25 to 750 ppm, preferably from 40 to 500 ppm, yet more preferably from 50 to 400 ppm.

When the peroxygen used during the irradiating step comprises or consists of H₂O₂, the H₂O₂ content in the water effluent to be treated may be from 10 to 1,000 ppm, preferably from 25 to 750 ppm, preferably from 40 to 500 ppm, yet more preferably from 50 to 400 ppm.

Under the alkaline condition and the above-mentioned H₂O₂:CN molar ratio, at least one of said metal-cyanide complexes undergoes photo-dissociation and liberates free cyanide ligands from the complex. The removal of a first ligand CN from the complex is the most difficult step in this reaction, and once the first ligand CN is removed from the stable metal-cyanide complex, it becomes much easier to remove the remaining CN ligands. As an example, the UV irradiation of the hexaferrocyanate proceeds as follows:

Fe(CN)₆³⁻ + H₂O → [Fe(CN)₅H₂O]²⁻ + CN⁻ (i)

[Fe(CN)₅H₂O]²⁻ + 2H₂O → Fe(OH)₃(s) + 5CN⁻ + 3H⁺ (ii)

*hv*

H₂O₂ → 2OH^{•} (iii)

The UV irradiating step further includes formation - see reaction (iv) - of cyanate from cyanide (free and liberated ligand from metal-cyanide complexes) and also further conversion of the cyanate to bicarbonate and nitrogen gas - see reaction (v), according to the following reactions (iv) and (v):

*hv* CN⁻ + 2OH^{•} → CNO⁻ + H₂O (iv)

*hv* CNO⁻ + 3OH^{•} → HCO₃⁻ + ½N₂(g) + H₂O (v)

The cyanate can also be hydrolysed to carbonate anion and ammonium cation - see reaction (vi):

CNO⁻ + H₂O → CO₃²⁻⁻ + NH₄⁺ (vi)

Care must be given to avoiding an excess of H₂O₂ during the UV irradiation, as there is a risk of generating extra hydroxyl radicals which then can react with cyanate (CNO⁻) to generate nitrate and nitrite, according to the following reactions (vii) and (viii):

CNO⁻ + 60H^{•} → HCO₃⁻ + ½NO₂⁻ + 2H₂O (vii)

CNO⁻ + 8OH^{•} → HCO₃⁻ + ½NO₃⁻ + 3H₂O (viii)

The formation of nitrate and nitrite in the irradiated effluent potentially add other compounds which may have to be removed from the water effluent before being discharged. The formation of nitrogen gas from cyanate is therefore preferred, as N₂ gas can be readily liberated from a UV/H₂O₂ treatment unit where the UV peroxidation takes place.

The process may further comprise reducing the pH of the irradiated effluent with an acid, preferably a mineral acid such as sulfuric acid or hydrochloric acid, before contacting with the solid adsorbent. Since the irradiation step is preferably carried out at a pH of 9 up to 11, the pH may be reduced to a value from 7 to 9, preferably a pH from 7 to 8.8, more preferably a pH from 7.5 to 8.8, yet more preferably a pH from 7.5 to 8.5.

### CONTACTING STEP WITH A SOLID APATITIC ADSORBENT

The second step in the present invention relates to the use of the solid adsorbent comprising apatite, preferably a synthetic hydroxyapatite, for removing at least a portion of one or more contaminants, for example in the form of metals, non-metals, their ions, and/or organics from the irradiated water effluent.

Contacting the irradiated effluent with a solid adsorbent comprising apatite is preferably effective in removing simultaneously a large variety of contaminants such as organics (e.g., PAHs, phenolic compounds, naphtol and derivatives) and/or inorganics such as metals and non-metals from a contaminated water effluent. The organic contaminants may be dissolved and/or suspended, and the metal and non-metal contaminants may be in cationic and anionic forms.

For simplicity sake, this contacting step for metal and optionally organics removal may be termed as "adsorption step".

Contacting the irradiated effluent with the solid adsorbent comprising apatite is preferably effective in removing at least part of metallic ions containing a metal such as: Al, Ag, Ba, Be, Ce, Co, Cd, Cu, Cr, Fe, Hg, La, Li, Mn, Mg, Mo, Ni, Pb, Pd, Rb, Sb, Sn, Sr, Th, Ti, U, V, Y, Zn and/or non-metallic elements such as As, B, F, Se, preferably selected from the group consisting of barium, cadmium, cobalt, copper, magnesium, manganese, nickel, selenium, zinc, and combinations thereof.

The contacting step with the solid adsorbent comprising apatite may be carried out at a pH of at least 6.5, or at least 7, or at least 7.5, and/or at most 10, or at most 9.5, or at most 9, or at most 8.8, or at most 8.5.

The contacting step with the solid adsorbent comprising apatite is preferably carried out at a pH from 7 to 9, preferably a pH from 7 to 8.8, more preferably a pH from 7.5 to 8.8, yet more preferably a pH from 7.5 to 8.5.

The contacting step is carried out for at least 5 minutes, or at least 10 minutes, and/or less than 120 min, or less than 60 min, or less than 30 min.

The conditions for the adsorption step include a temperature from 0°C to about 60°C, preferably from 0°C to about 40°C, more preferably from 15°C to about 25°C. The conditions for the adsorption step more preferably include ambient temperature and atmospheric pressure of the location where the process is operated.

The contacting step with the solid adsorbent and the irradiating step with peroxygen may be carried out in different units, alternatively these two steps may be carried out in a same unit, such as a mixed tank or a tank where the water effluent is circulated for example by an internal or external pump.

The contacting with the solid adsorbent may be carried out in a mixed tank or a tank where the water effluent is circulated for example by an internal or external pump, and in such case, the solid adsorbent is in the forms of particles which are suspended in the irradiated effluent in the tank.

The contacting with the solid adsorbent and the separation step may be carried out in a same unit, preferably wherein the unit is a settler and wherein the solid adsorbent is added to the settler in a zone to allow contact with the irradiated effluent to remove some organics and metallic contaminants and for the solid adsorbent to settle after contact.

In the purification or removal process according to the invention, the contaminated effluent may be an irradiated water effluent containing metallic contaminants, such as: Al, Ag, Ba, Be, Ce, Co, Cd, Cu, Cr, Fe, Hg, La, Li, Mn, Mg, Mo, Ni, Pb, Pd, Rb, Sb, Sn, Sr, Th, Ti, U, V, Y, Zn and/or non-metallic elements such as As, B, F, Se, whether these elements may be in the form of cations and/or anions, such as oxyanions, and optionally organic contaminants (e.g., PAHs, phenolic compounds, naphtol and derivatives), according to which the solid adsorbent comprising hydroxyapatite (preferably in suspension form) is mixed into the irradiated water effluent for a sufficient time so that the hydroxyapatite adsorbs at least a portion of the contaminants. The mixture is preferably subjected to a separation (such as settling and/or clarification) in order to produce a treated water which is partially purified of organic, metallic and/or non-metallic contaminants and a spent solid adsorbent loaded with organic, metallic and/or non-metallic contaminants that is then removed from the treated effluent.

In the contacting step, the solid adsorbent may be used with the irradiated water effluent in a contact reactor, such as a sludge blanket reactor or a fluidized bed. The contact time between the solid adsorbent and the irradiated water effluent is in general at least one minute, advantageously at least 15 minutes, more advantageously at least 30 minutes, even more advantageously at least one hour.

In one particularly advantageous embodiment of the invention, the irradiated water effluent may be introduced into a sludge blanket contact reactor in which the solid adsorbent is present at a weight concentration from at least 0.5% by weight to in general at most 10% by weight, preferably from 1 to 10 wt%, more preferably from 2 to 5 wt%; a liquid is recovered as overflow from the sludge blanket reactor; a flocculant is added to the recovered liquid in order to form a mixture comprising particles of the solid adsorbent entrained out of the contact reactor and flocculated; said mixture is then introduced into a settling tank where the mixture is separated into:
- the treated water partially purified of organic, metallic elements and/or of non-metallic elements, and said treated water is recovered as overflow from the settling tank,
- and into an underflow from the settling tank comprising flocculated and settled particles of solid adsorbent recovered as underflow from the settling tank;
and at least one portion of the underflow from the settling tank containing flocculated and settled particles of adsorbent is recycled to the sludge blanket contact reactor. The effectiveness of the treatment of organics, metallic elements and/or non-metallic elements may be monitored by comparing the concentrations of the elements upstream (in the water effluent) and downstream of the treatment (in the partially purified liquid), for example by an automatic analyser or by sampling and analysis. The solid adsorbent charge of the contact reactor is in general regularly renewed in portions. For example, by partial purging of the spent solid adsorbent loaded with organics, metallic and/or non-metallic elements at the underflow from the settling tank, and by adding fresh solid adsorbent to the contact reactor. Such a process thus ensures a "chemical polishing" of the water effluent. The process is particularly advantageous in the case where the treated water partially purified of organics, metallic and/or non-metallic elements is then treated in a biological treatment plant producing sewage sludges. This makes it possible to reduce the concentrations of such elements of said sewage sludges and to reutilize them, for example in agriculture or in land development.

### SOLID ADSORBENT COMPRISING APATITE

The second step in the present invention relates to the use of a solid adsorbent comprising apatite, preferably an hydroxyapatite, for removing at least a portion of one or more contaminants, for example in the form of organics, metallic and/or non-metallic ions from the irradiated water effluent.

The term "apatite" denotes a family of mineral compounds, the chemical formula of which can be written in the following general form:

Me₁₀(XO₄)₆Y₂

In this formula, Me generally represents a divalent cation (Me²⁺), XO₄ a trivalent anionic group (XO₄³⁻) and Y a monovalent anion (Y⁻).

Calcium phosphate hydroxyapatite Ca₁₀(PO₄)₆(OH)₂ crystallizes in the space group of the hexagonal system. This structure consists of a close-packed quasi-hexagonal stack of XO₄ groups, forming two types of parallel tunnels.

The existence of these tunnels gives apatites chemical properties akin to those of zeolites. Vacancies may also be created either by the departure of anions and cations, or by the presence of cations or anions of different valency. Apatites therefore appear to be particularly stable structures which may tolerate large gaps in their composition.

Hydroxyapatite should not be confused with tricalcium phosphate (TCP), which has a similar weight composition : Ca₃(PO₄)₂. The Ca/P molar ratio of TCP is 1.5 whereas the Ca/P molar ratio is 1.67 for hydroxyapatite. Industrial apatites sold as food additives or mineral fillers are, as a general rule, variable mixtures of TCP and hydroxyapatite.

Other salts of calcium and phosphate, including TCP, do not have the same properties as hydroxyapatite. Although TCP can also react with heavy metals, hydroxyapatite is more advantageous as it can enclose metals in the form of an insoluble, and therefore relatively inert, matrix.

The solid adsorbent may have a particularly high BET specific surface area (at least 110 m²/g) and/or a particularly high pore volume (at least 0.3 cm³/g) measured after heat treatment of the solid adsorbent at 105°C.

Such solid adsorbent particles are composed on their surface of plate-like crystallites, of thickness of a few nano-meters (nm).

Particles of solid adsorbent may be covered with plate-like crystallites, having a thickness of at most 25 nm, preferably of at most 20 nm, more preferably of at most 10 nm. The thickness of plate-like crystallites may be at least 1 nm, preferably at least 2 nm, more preferably at least 4 nm. The solid adsorbent used in the present invention may further have a remarkably low solubility of the phosphates contained in the solid adsorbent particles.

The adsorbent preferably comprises solid particles with a mean diameter D50 of which is greater than 10 µm, in general greater than 20 µm, or even greater than 25 µm, or even at least 30 µm, or even at least 35 µm, and/or preferably less than 200 µm, or even less than 150 µm, or even less than 100 µm. In some preferred embodiments, the adsorbent comprises solid particles with a mean diameter D50 from 20 microns to 60 microns, or from 25 microns to 60 microns, or from 30 microns to 60 microns. The mean diameter in question is the D50, that is to say the diameter such that 50 % by weight of the particles have a diameter less than said value.

The mean particles size D50 is the diameter such that 50 % by weight of the particles have a diameter less than said value. The particle size measurement may be measured using laser diffraction, such as using a Beckman Coulter LS 230 laser diffraction particle size analyser (laser of wavelength 750 nm) on particles suspended in water and using a size distribution calculation based on Fraunhofer diffraction theory (particles greater than 10 µm) and on Mie scattering theory (particles less than 10 µm), the particles being considered to be spherical.

In preferred embodiments, the solid adsorbent is inorganic.

In other embodiments, the solid adsorbent contains less than 1 wt% organics.

### Solid adsorbent comprising a hydroxyapatite

The solid adsorbent comprising apatite preferably comprises an hydroxyapatite, preferably a hydroxyapatite which is synthetically made. Suitable hydroxyapatite includes a calcium-deficient hydroxyapatite with a Ca/P ratio more than 1.5 and less than 1.67, preferably with a Ca/P molar ratio more than 1.54 and less than 1.65. The calcium-deficient hydroxyapatite is generally in crystalline form or in vitreous form.

The solid adsorbent comprises at least 60 wt % of a calcium-deficient hydroxyapatite.

The solid adsorbent may comprise at least 65 wt%, preferably at least 70 wt%, more preferably at least 75 wt%, yet more preferably at least 80 wt%, yet most preferably at least 85 wt%, of the calcium-deficient hydroxyapatite, and/or
- at most 99 wt%, preferably at most 98 wt%, more preferably at most 97 wt%, yet more preferably at most 95 wt%, even more preferably at most 93 wt%, most preferably at most 91 wt% of the calcium-deficient hydroxyapatite.

In preferred embodiments, the solid adsorbent may further include one or more additional components different from the calcium-deficient hydroxyapatite.

Calcium may be and is preferably present in another form (other than the calcium-deficient hydroxyapatite) in the solid adsorbent. Calcium carbonate is generally present in the solid adsorbent. The weight ratio of the calcium-deficient hydroxyapatite to calcium carbonate is generally equal to or greater than 3, preferably equal to or greater than 4, more preferably equal to or greater than 5, yet more preferably greater than 7, most preferably equal to or greater than 9.

Generally, because of that other form of Ca in the solid adsorbent, the solid adsorbent generally has a higher Ca/P molar ratio than the calcium-deficient hydroxyapatite present in the solid adsorbent. For that reason, even though the calcium-deficient hydroxyapatite in the solid adsorbent may have a Ca/P molar ratio less than 1.67, the entire solid adsorbent may have a Ca/P molar ratio equal to or more than 1.67. In preferred embodiments, the calcium-deficient hydroxyapatite in the solid adsorbent may have a Ca/P molar ratio of about 1.55-1.59, while the solid adsorbent may have a Ca/P molar ratio of about 1.60-1.67.

In preferred embodiments, the solid adsorbent may further comprise calcium carbonate in an amount of less than 20 wt% and more than 0 wt%, preferably from 1 wt% to 19 wt%, more preferably from 2 wt% to 18 wt%, even more preferably from 5 wt% to 15 wt%, yet even more preferably from 7 wt% to 13 wt%, most preferably from 8 wt% to 12 wt%.

The solid adsorbent may further comprise less than 1 wt% of calcium dihydroxide Ca(OH)₂, preferably less than 0.5 wt% calcium dihydroxide Ca(OH)₂, more preferably less than 0.3 wt% calcium dihydroxide Ca(OH)₂, even more preferably less than 0.2 wt% calcium dihydroxide Ca(OH)₂, most preferably being substantially free of calcium dihydroxide Ca(OH)₂.

The solid adsorbent may further comprise water in an amount of less than 20 wt% and more than 0 wt%, preferably from 1 wt% to 18 wt%, more preferably from 2 wt% to 15 wt%, even more preferably from 4 wt% to 12 wt%, yet even more preferably from 5 wt% to 11 wt% most preferably from 6 wt% to 11 wt%.

In preferred embodiments, the solid adsorbent comprises at least 60 wt% of a calcium-deficient hydroxyapatite with a Ca/P ratio more than 1.5 and less than 1.67; calcium carbonate in an amount between 0.5 to 20 wt% and/or contains less than 1 wt% Ca(OH)₂.

In some preferred embodiments, the solid adsorbent is substantially free of carbon, i.e., less than 0.5 wt% of carbon.

In some other embodiments, the solid adsorbent may comprise carbon for example in an amount of at least 0.5 wt% carbon but in an amount of less than 7 wt% carbon, preferably less than 6 wt% carbon, more preferably less than 5 wt% carbon or less than 4 wt% carbon.

### Solid adsorbent comprising a hydroxyapatite composite

A hydroxyapatite composite can be effective in trapping simultaneously a large variety of contaminants such as organics (e.g., PAHs, phenolic compounds, naphtol and derivatives) and/or inorganics such as metals and non-metals from a contaminated water effluent. The organic contaminants may be dissolved and/or suspended, and the metal and non-metal contaminants may be in cationic and anionic forms.

To enhance the sorption of the hydroxyapatite towards a larger spectrum of contaminants, it has been found that the hydroxyapatite structure can be supplemented or modified by incorporating at least one additive during the synthesis of the hydroxyapatite to yield a hydroxyapatite composite with an improved adsorption affinity and/or efficiency with respect to at least one contaminant, such adsorption affinity and/or efficiency being greater than that of ae hydroxyapatite structure not containing the activated carbon.

Depending on the physical (size) and chemical forms (treated or not) of the additive which is present during the synthesis of the hydroxyapatite structure (e.g., added prior to the hydroxyapatite synthesis or to a vessel where the hydroxyapatite synthesis takes place), the additive in the hydroxyapatite composite may be embedded or incorporated into or coated onto the hydroxyapatite structure, or otherwise associated with the hydroxyapatite structure via cohesive forces. Regardless on how the additive is included in the resulting composite, its presence during the hydroxyapatite synthesis results in forming the hydroxyapatite composite.

The hydroxyapatite composite is different than a mere physical mixture of a hydroxyapatite and the additive, which in this case would be made after each material (hydroxyapatite and the additive) would be formed separately and then mixed or blended.

One advantage of embedding or incorporating the additive into the hydroxyapatite during its synthesis is to provide a much more stable material (compared to a mere physical mixture of a hydroxyapatite and the additive) which does not release the additive when in use, particularly in an aqueous solution when the hydroxyapatite composite is intended to perform as adsorbent for removal of contaminants from water.

In preferred embodiments, the additive in the hydroxyapatite composite is a co-sorbent.

The additive is preferably selected based on its own particular affinity and/or efficacy to adsorb or trap at least one contaminant that the hydroxyapatite structure (without additive) does not adsorb or weakly adsorbs. The contaminant may be in the form of organics (e.g., PAHs, phenolic compounds, naphtol and derivatives) and/or inorganics such as a metal or a non-metal in the form of a cation or an oxyanion. For example, the additive may be selected based on its own particular affinity and/or efficacy to adsorb organics (e.g., PAHs, phenolic compounds, naphtol and derivatives) or mercury such as in the form of mercury cation, selenium such as in the form of its oxyanions (selenate and/or selenite), arsenic such as in the form of its oxyanions (H₂AsO₄⁻/HAsO₄²⁻) and uncharged H₃AsO₃ form of As(III), and/or boron such in the form of borate.

The additive may be further selected based on its ability to increase the porosity of the hydroxyapatite structure. For example, it is preferred that the pore volume and/or the BET surface area of the resulting hydroxyapatite composite synthesized with the additive is higher than that of the hydroxyapatite structure synthesized without the additive.

One advantage of the present invention is improving the sorption affinity of the hydroxyapatite composite for at least one contaminant that would otherwise not be adsorbed or poorly adsorbed from a contaminated effluent by a hydroxyapatite synthesized without the additive. The at least one contaminant may be an organic compound, or a metal or non-metal in the form of a cation or an oxyanion.

Another advantage of a hydroxyapatite composite is improving the sorption capacity of the hydroxyapatite composite, for example by increasing its pore volume and/or BET surface area.

When the additive can be used as a co-sorbent in powder form for water treatment, the inclusion of the additive powder as co-sorbent in the hydroxyapatite composite provides yet another advantage. While the use of a co-sorbent in a loose powder offers large surface area and high adsorption capacity, a loose powder needs specific and costly equipment to be removed from treated water effluents, and solid/liquid separation problems limit reactor configurations that require incorporating large sedimentation basins or filtration. There is therefore a benefit for a powdered co-sorbent to be incorporated into the hydroxyapatite structure to form the composite, so it can be used in practical adsorption processes. The hydroxyapatite synthesis which comprises the presence of the additive powder generates solid particles of larger size than the powder, and these larger particles are easier to separate from a treated water effluent, using a solid/liquid separation technique such as by settling.

One embodiment according to the present invention relates to the use of a hydroxyapatite composite in the solid adsorbent during the contacting step. Such hydroxyapatite composite comprises:
- a hydroxyapatite; and
- at least one additive which is present during the hydroxyapatite synthesis.

The at least one additive or a precursor thereof may be added to a vessel where hydroxyapatite synthesis takes place, prior to or during the synthesis of the hydroxyapatite. That is to say, when the synthesis of the hydroxyapatite takes place in a vessel, the additive or a precursor thereof may be added to the vessel before the synthesis is initiated or while the hydroxyapatite structure is synthetized in this vessel.

A particular embodiment according to the present invention relates to a hydroxyapatite composite which comprises:
- a hydroxyapatite; and
- at least one additive which increases the porosity of the hydroxyapatite.
The at least one additive is present while the hydroxyapatite structure is synthetized. The at least one additive may be added to the vessel before the synthesis is initiated or while the hydroxyapatite structure is synthetized in this vessel.

The hydroxyapatite composite may have a higher total pore volume and/or a higher BET surface area than a hydroxyapatite material made without the additive.

The hydroxyapatite composite according to the present invention is an effective reactant for immobilizing contaminants from water, in particular when employed in dispersed mode in water treatment units.

The hydroxyapatite composite may comprise at least 50wt% hydroxyapatite, advantageously at least 60wt%, and more advantageously still at least 70wt% hydroxyapatite or at least 75wt% hydroxyapatite, based on the total weight of dry matter.

In some embodiments, the hydroxyapatite composite may comprise a calcium-deficient hydroxyapatite, preferably with a Ca/P molar ratio more than 1.5 and less than 1.67.

In some embodiments, the hydroxyapatite composite may comprise a calcium-deficient hydroxyapatite and has an overall Ca/P molar ratio higher than the calcium-deficient hydroxyapatite.

The hydroxyapatite composite may further comprise, on the basis of total weight of dry matter,
- water, of the order of from 1 wt% to 30 wt%, advantageously from 2 wt% to 25 wt%, or from 2 wt% to 20 wt%, or from 3 wt% to 15wt% , and/or
- calcium carbonate in an amount of less than 20 wt%, preferably from 1 wt% to 19 wt%, more preferably from 2 wt% to 18 wt%, even preferably from 3 wt% to 15 wt%, yet even more preferably from 4 wt% to 13 wt%, most preferably from 5 wt% to 10 wt%.

The hydroxyapatite composite may further comprise, based on the total weight of dry matter, less than 1 wt% of calcium dihydroxide Ca(OH)₂, preferably less than 0.5 wt% calcium dihydroxide, more preferably less than 0.3 wt% calcium dihydroxide, even more preferably less than 0.2 wt% calcium dihydroxide, or even less than 0.1 wt% Ca(OH)₂).

The hydroxyapatite composite preferably comprises a weight ratio of hydroxyapatite to additive (HAP:A) of from 1:0.01 to 1:0.5. That is to say, when 100g of hydroxyapatite in the composite, a minimum of 1 g of additive is present and/or a maximum of 50 g is present in the composite. The weight ratio of is preferably at least 1:0.02 or at least 1:0.03. The weight ratio of is preferably at most 1:0.3, more preferably at most 1:0.25. The hydroxyapatite composite may comprise a weight ratio of hydroxyapatite to additive (HAP:A) of from 1:0.01 to 1:0.5, preferably from 1:0.02 to 1:0.4 or from 1:0.03 to 1:0.4, more preferably from 1:0.04 to 1:0.3, yet more preferably from 1:0.05 to 1:0.25, yet even more preferably from 1:0.05 to 1:0.20.

A range of 5 to 20 g additive per 100 g of hydroxyapatite is particularly suitable.

The hydroxyapatite composite may comprise at least 2 wt%, or at least 3 wt%, or at least 4 wt% of the additive based on the total weight of dry matter.

The hydroxyapatite composite may comprise at most 50 wt%, or at most 30 wt%, or at most 20 wt% of the additive based on the total weight of dry matter.

The hydroxyapatite composite may further comprise: water, of the order of from 0 to 20 wt%, advantageously from 1 % to 20 wt%, more advantageously from 2 % to 10 wt%, based on the total weight of dry matter.

In some embodiments, the hydroxyapatite composite may comprise water, of the order of from 5 wt% to 20 wt%, advantageously from 6 wt% to 20 wt%, based on the total weight of dry matter.

In some embodiments, the hydroxyapatite composite may comprise, based on the total weight of dry matter, less than 5 wt% water, preferably less than 5 wt% and down to 0.1 wt% or even lower

In some embodiments, the hydroxyapatite composite may further comprise, based on the total weight of dry matter, calcium carbonate in an amount of less than 20 wt% and more than 0 wt%, preferably from 1 wt% to 19 wt%, more preferably from 2 wt% to 18 wt%, even more preferably from 5 wt% to 15 wt%, yet even more preferably from 7 wt% to 13 wt%, most preferably from 8 wt% to 12 wt%.

The hydroxyapatite composite may further comprise, based on the total weight of dry matter, calcium dihydroxide Ca(OH)₂ from 0 to 20 %, advantageously from 0 to 4 %, or more advantageously from 0 to 1 wt%, or alternatively more than 0 wt% but at most 4 wt%, or from 1% to 4wt%.

In some embodiments, the hydroxyapatite composite may comprise less than 1 wt% of calcium dihydroxide Ca(OH)₂, preferably less than 0.5 wt% calcium dihydroxide, more preferably less than 0.3 wt% calcium dihydroxide, even more preferably less than 0.2 wt% calcium dihydroxide. In some embodiments, the hydroxyapatite composite is substantially free of calcium dihydroxide (i.e., less than 0.1 wt% Ca(OH)₂).

In some embodiments, the hydroxyapatite composite may comprise at least 2 wt%, preferably at least 2.5 wt% or at least 3 wt%, more preferably at least 5 wt%, and yet more preferably at least 6 wt% of hydroxide ions.

In some embodiments, the hydroxyapatite composite may comprise, on the basis of the total weight of dry matter,
- water, of the order of from 1 wt% to 20 wt%, advantageously from 2 wt% to 20 wt%, or from 2 wt% to 10 wt%, or from 3 wt% to 8 wt% , and/or
- calcium carbonate in an amount of less than 20 wt% and more than 0 wt%, preferably from 1 wt% to 19 wt%, more preferably from 2 wt% to 18 wt%, even preferably from 3 wt% to 15 wt%, yet even more preferably from 4 wt% to 13 wt%, most preferably from 5 wt% to 10 wt%.

In some embodiments, the hydroxyapatite composite may be in the form of particles having a specific surface area of at least 110 m²/g, preferably of at least 120 m²/g, more preferably of at least 130 m²/g, yet more preferably of at least 140 m²/g.

In additional embodiments, the hydroxyapatite composite may be in the form of particles having a total pore volume of at least 0.3 cm³/g, or at least 0.32 cm³/g, or at least 0.35 cm³/g, or at least 0.4 cm³/g.

In preferred embodiments, the additive is inorganic.

The hydroxyapatite composite may comprise more than one additive.

In such embodiments, a first additive may serve as support for a second additive.

In some embodiments, the additive may comprise at least one activated carbon, iron (which may be in the form of metal of oxidation state 0, salt, oxide, oxyhydroxide, or hydroxide, preferably oxyhydroxide or hydroxide), or combinations of two or more thereof.

In some embodiments, the hydroxyapatite composite may comprise an activated carbon as a first additive and iron (for example in the form of zero-valent metal, salt, oxide, oxyhydroxide, or hydroxide) as a second additive.

In some embodiments, the additive may comprise or consist of at least one activated carbon.

Activated carbon may originate from various sources. It can be produced from carbonaceous source materials such as bamboo, coconut husk/shell, willow peat, wood, coir, lignite, coal, petroleum coke, and/or petroleum pitch.

In preferred embodiments, the activated carbon used as additive is in a powder form. Its average particle size is generally in size of less than 1 mm. The preferred average particle size for activated carbon may be at most 500 microns, preferably at most 400 microns, or at most 300 microns, or at most 200 microns, or at most 100 microns, or at most 80 microns, or at most 60 microns. Generally, the average particle size for activated carbon may be at least 5 microns, or at least 10 microns.

In particular embodiments, the average particle size for activated carbon is preferably within +/- 50% of the average particle size of the hydroxyapatite which is to be synthesized in the presence of this activated carbon.

In particular preferred embodiments, the average particle size for activated carbon is preferably less than the average particle size of the hydroxyapatite which is to be synthesized in the presence of this activated carbon.

The activated carbon may be selected based at least on the following criteria: the activated carbon yields a pH of at least 5 when dispersed in a suspension at 0.3 wt% in deionized water for 5 hours.

When the additive comprises an activated carbon or blend of two or more activated carbons, the activated carbon or blend of two or more activated carbons is selected so that a 0.3 wt% dispersion of the activated carbon(s) in deionized water provides a pH of 5 or more.

If the selected activated carbon yields a pH of less than 5 when dispersed in a suspension at 0.3 wt% in deionized water for 5 hours, then a blend with another more-alkaline activated carbon may be used in the additive to provide a pH of 5 or more.

The activated carbon may comprise a pore volume of at least 0.25 cm³/g, preferably of at least 0.35 cm³/g, more preferably of at least 0.4 cm³/g.

The activated carbon may have a BET surface are of at least 500 m²/g, preferably of at least 750 m²/g.

The activated carbon may have a unique distribution of pore sizes that contributes to the ability of the composite to remove specific contaminants from aqueous systems. In one embodiment, the activated carbon has a porosity of at least about 0.25 cm³/g. The pores diameter of the activated carbon may be at least about 10 and at most about 500 Å (Hg intrusion porosimetry, such as using a Micromeritics model AutoPore-II 9220 porosimeter). In another embodiment, the activated carbon has a porosity of at least about 0.4 cm³/g in pores diameter of at least about 10 and at most about 500 Å.

In some embodiments, the activated carbon has been subjected to a treatment prior to being used into the hydroxyapatite composite synthesis. Such treatment may enhance the sorption capability of the activated carbon and/or modify the porosity of the activated carbon.

For example the activated carbon may be impregnated by sulfur to enhance the sorption of mercury cations. An example of such sulfur-impregnated activated carbon is MerSorb® from NUCON International.

In another treatment example, the activated carbon may be subjected to an acid treatment such as with nitric acid.

Yet in another treatment example, the activated carbon may be subjected to steam, generally to impact its porosity.

In some embodiments, the activated carbon is not treated with acid prior to being used into the hydroxyapatite composite synthesis.

In some embodiments concerning the formulation of the hydroxyapatite composite, the additive may exclude activated carbon.

The additive may comprise or consist of an iron-containing additive, preferably in the form of metal of oxidation state 0, salt, oxide, oxyhydroxide, or hydroxide, preferably in the form of metal of oxidation state 0, oxide, oxyhydroxide, or hydroxide. The iron in the additive may be of oxidation state 0, 2 or 3. The iron-containing additive is preferably inorganic. If the additive comprises an iron salt, the iron salt is preferably inorganic.

The additive may comprise or consist of an iron oxide. The iron oxide may be iron(III) oxide or ferric oxide of formula Fe₂O₃, iron(II) oxide (FeO), or iron(II,III) oxide (Fe₃O₄). The additive may comprise or consist of Fe₃O₄. Fe₃O₄ can occur naturally as the mineral magnetite or may be synthesized, for example in the form of nanoparticles. Examples of synthesis of Fe₃O₄ nanoparticles can be found in Gonzales et al., 2012, Journal of Hazard Materials, vol. 211-212, pg. 138-145 using non microwave-assisted or microwave-assisted synthetic techniques or using chemical co-precipitation method similar to previously described in Onar & Yakinci, Journal of Physics: Conference Series 667 (2016) 012005, the International Conference on Magnetic and Superconducting Materials (MSM15), IOP Publishing doi:10.1088/1742-6596/667/1/012005, and Meng et al, Applied Surface Science, Vol.280, pg. 679-685.

When the additive comprises iron, the additive more preferably comprises iron(III) hydroxide, and/or iron(III) oxyhydroxide; more preferably comprises iron(III) oxyhydroxide.

Iron(III) hydroxide has the chemical formula Fe(OH)₃.

Iron(III) oxyhydroxide has the chemical formula FeOOH. It can be obtained for example by reacting ferric chloride with sodium hydroxide. Alternatively, iron(II) may be oxidized to iron(III) by hydrogen peroxide in the presence of an acid. Furthermore, ferric hydroxide can be prepared as described in WO2003/053560 or can be prepared as described in [0045] of WO2017/109014 using solution of Fe(N0₃)₃ and acetic acid and solution of ammonia. Alternatively, commercially available iron(III) oxide-hydroxide may be used. Iron(III) oxide-hydroxide occurs in anhydrous and hydrated forms. Ferrihydrite (FeOOH•0.4H₂O) is a hydrous ferric oxyhydroxide mineral which is also suitable for use as additive. Furthermore, iron(III) oxyhydroxide occurs in four different polymorphic forms, known as alpha-, beta-, gamma- and delta-FeOOH. All these forms may be used in the present invention. Goethite is a widespread mineral of formula α-FeO(OH) and lepidocrocite is a less common mineral of formula γ-FeO(OH) with the same chemical composition as goethite but with a different crystal structure.

The iron(III) oxyhydroxide particles may have a median particle size in the range of from about 1 to about 3,000 nm, preferably about 5 to about 2,000 nm, more preferably from about 10 to about 700 nm, even more preferably from about 50 to about 500 nm, such as in the range of from about 100 to about 400 nm. The iron(III) oxyhydroxide may be formed in situ during the synthesis of the hydroxyapatite by adding the Fe precursor and adding a base to form the FeOOH, or FeOOH may be added as an aqueous slurry or solution comprising from at least 1 wt% to at most 20 wt% FeOOH, or from at least 2 wt% to at most 15 wt% FeOOH, or from at least 2 wt% to at most 10 wt% FeOOH.

The iron may be added during the synthesis of the hydroxyapatite in the form of an iron precursor such as a salt. A suitable precursor of iron may be iron chloride, iron nitrate, iron sulfate, or any combination thereof. A base (source of OH⁻) is generally added to this iron precursor to generate iron(III) hydroxide or oxyhydroxide.

In some embodiments concerning the formulation of the hydroxyapatite composite, the additive may exclude iron.

Consequently the adsorbent material used for removal of contaminants from the water effluent, may comprise one of the following materials:
- one synthetic hydroxyapatite (made without additive);
- one hydroxyapatite composite with at least one additive selected from the group consisting of one or more activated carbons, iron (such as in the form of metal, salt, hydroxide, oxyhydroxide, or oxide); and combinations thereof;
- two or more hydroxyapatite composites, wherein the additives in the hydroxyapatite composites are different; preferably wherein at least one of the additives in a first hydroxyapatite composite comprises an activated carbon or blend of two or more activated carbons, and wherein at least one of the additives in a second hydroxyapatite composite comprises iron (such as in the form of metal, salt, hydroxide, oxyhydroxide, or oxide); or
- a blend of a synthetic hydroxyapatite without additive and at least one hydroxyapatite composite with at least one additive selected from the group consisting of one or more activated carbons, iron (such as in the form of metal, salt, hydroxide, oxyhydroxide, or oxide); and combinations thereof.

In the process for treating of the present invention, the contacting step can remove at least a portion of one or more contaminants from the irradiated effluent to be treated, for example organic contaminants (e.g., PAHs, phenolic compounds, naphtol and derivatives) or inorganic contaminants in the form of metals, non-metals, their cations and/or oxyanions, particularly Hg or its cation, As, B, and/or Se, or their respective oxyanions, comprising contacting the hydroxyapatite composite or the adsorbent material comprising at least one hydroxyapatite composite with the irradiated effluent to be treated.

For removing at least a portion of organic contaminants (e.g., PAHs, phenolic compounds, naphtol and derivatives) from the irradiated water effluent, it is particularly advantageous in the contacting step to use a hydroxyapatite composite comprising at least one activated carbon.

For removing at least a portion of Hg, particularly Hg cations from the irradiated water effluent, it is particularly advantageous in the contacting step to use a hydroxyapatite composite comprising at least one activated carbon, at least one iron (such as in the form of iron(III) hydroxide and/or iron(III) oxyhydroxide), or combination thereof.

For removing at least a portion of As, particularly As oxyanions from the irradiated water effluent, it is particularly advantageous in the contacting step to use:
- a hydroxyapatite composite comprising activated carbon, iron in the form of iron(III) hydroxide and/or iron(III) oxyhydroxide, or combination thereof or
- two hydroxyapatite composites, one comprising activated carbon, while the other comprises iron in the form of iron(III) hydroxide and/or iron(III) oxyhydroxide, or combination thereof.

For removing at least a portion of Se, particularly Se oxyanions from the irradiated water effluent, it is particularly advantageous in the contacting step to use:
- a hydroxyapatite composite comprising activated carbon, iron in the form of iron(III) hydroxide and/or iron(III) oxyhydroxide, or combination thereof or
- two hydroxyapatite composites, one comprising activated carbon, while the other comprises iron in the form of iron(III) hydroxide and/or iron(III) oxyhydroxide, or combination thereof.

For removing at least a portion of metallic cations from the irradiated water effluent, such as cations of Al, Ag, Ba, Be, Ce, Co, Cd, Cu, Cr, Fe, La, Li, Mn, Mg, Mo, Ni, Pb, Pd, Rb, Sb, Sn, Sr, Th, Ti, U, V, Y, and/or Zn, it is particularly advantageous in the contacting step to use a synthetic hydroxyapatite and/or a hydroxyapatite composite comprising at least one activated carbon, at least one iron (such as in the form of iron(III) hydroxide and/or iron(III) oxyhydroxide), or combination thereof.

### METHODS FOR MAKING THE SOLID ADSORBENT

### For the solid adsorbent comprising a synthetic hydroxyapatite:

The solid adsorbent may be made by a process comprising:
- in a first step, a source of calcium and a source of phosphate ions are mixed in water in a molar ratio that is adjusted to obtain a Ca/P molar ratio of between 0.5 and 1.6, preferably between 0.7 and 1.3, and reacting the source of calcium with the phosphate ions at a pH of between 2 and 8, in order to obtain a suspension (A) of calcium phosphate,
- in a second step, adding to the suspension (A) an alkaline compound comprising hydroxide ions in order to set a pH of at least 7.5, preferably at least 8, or at least 8.5, or at least 9, or of at least 10; further adding an additional source of calcium in order to obtain a suspension (B) of composite having a Ca/P molar ratio of greater than 1.6, preferably greater than 1.65 to form a hydroxyapatite structure.

A particular process for producing the hydroxyapatite adsorbent can be found in WO 2015/173437 by Solvay SA, the details of such production process being herein incorporated by reference.

The source of calcium advantageously comprises calcium carbonate, or calcium oxide, or calcium hydroxide, or calcium chloride, or calcium nitrate, or calcium acetate. The source of calcium is more advantageously a limestone, or a mixture of limestone and calcium oxide or hydroxide. More advantageously, the source of calcium is in the form of powder or aqueous suspension of powder and the powder is selected from: calcium carbonate, calcium oxide, calcium hydroxide, or a mixture thereof, and the powder has a mean particle size of less than 300 µm.

It is advantageous for the source of calcium selected from calcium carbonate, calcium oxide, calcium hydroxide or mixtures thereof to be in the form of a powder or aqueous suspension of powder, and to have a small particle size. In one recommended variant, the mean diameter of the particles of the powder is less than 300 µm, advantageously less than 200 µm and preferably less than 100 µm. The mean diameter in question is the D50, that is to say the diameter such that 50% by weight of the particles have a diameter less than said value.

In the present invention, various sources of phosphate ions may be used, in particular:
- phosphoric acid,
- or a dihydrogen phosphate salt such as a sodium, potassium or ammonium dihydrogen phosphate salt, preferably a sodium dihydrogen phosphate salt,
- or a monohydrogen phosphate salt such as a sodium, potassium or ammonium monohydrogen phosphate salt, preferably a sodium monohydrogen phosphate salt.

In the present invention, phosphoric acid is preferred due to its greater availability and lower cost compared to dihydrogen and monohydrogen phosphate salts.

The suspended solids density of the suspension (A) in the first step is in general at most 20% by weight.

The suspended solids density of the suspension (B) in the second step is in general at most 25% by weight. A preferred range of suspended solids density of the suspension (B) in the second step is from 16 wt% to 24 wt%. It has been indeed observed that a too low density of suspension decreases the efficacy of the produced reactant particles in heavy metal adsorption. Moreover a too low density of suspension induces longer time of water separation when decantation or filtration is used in the process.

In the process for making the adsorbent, the stirring of the suspension during the first and second steps corresponds generally to a stirring dissipated energy in the reactors volume of at least 0.2 and at most 1.5 kW/ m³, preferably at least 0.5 and at most 1.0 kW/ m³.

In the process for making the adsorbent, the first step is preferably carried out at a temperature of less than 50°C, preferably at a temperature of at most 45°C, or at a temperature of at most 40°C, more preferably at a temperature of at most 35°C. This makes it possible to obtain an adsorbent at the end of the second step in the form of particles of large to medium particle size and having a high specific surface area.

An embodiment of the present invention further relates to the use of particles of hydroxyapatite adsorbent,
- having a mean size of at least 20 µm, or of at least 25 µm, or of at least 30 µm;
- having a specific surface area of at least 110 m²/g, or of at least 120 m²/g, or of at least 130 m²/g, or of at least 140 m²/g; and/or
- having a total pore volume of at least 0.3 cm³/g, or of at least 0.32 cm³/g, or at least 0.4 cm³/g.

In the process of the present invention, it is advantageous for the second step to be carried out at a temperature of at least 45°C, preferably of at least 50°C, more preferably of at least 55°C, or of at least 60°C, or of at least 80°C. Specifically, this makes it possible to rapidly convert the calcium phosphate compound of low Ca/P ratio (such as brushite) from the first step into the adsorbent comprising a hydroxyapatite of higher Ca/P ratio, with a good fixation of the hydroxide ions at the core and at the surface of the adsorbent, and to more rapidly consume the phosphates from the solution of the suspension (B). Advantageously, the second step is carried out for a duration of at least 0.5 hour.

In a particular preferred embodiment, the method takes place in two steps, a first step called "acid attack" and a second step, called "lime maturation". The first step includes the decarbonation of calcium carbonate (as source of calcium) by the addition of phosphoric acid (as source of phosphate ions). Carbonic acid formed by this acid attack decomposes into water and carbon dioxide, as soon as the maximum solubility of CO₂ in the aqueous phase is reached. Calcium hydrogenphosphate (CaHPO₄.2H₂O, also known as brushite) formed in the first step has a Ca/P molar ratio of 1. However, the Ca/P molar ratio of a stoichiometric hydroxyapatite is 1.67. So there is a calcium deficit that has to be filled by the second step. In the second step "lime maturation", the addition of lime (Ca(OH)₂) as an additional source of calcium to the brushite contributes the calcium necessary to approach a stoichiometric hydroxyapatite. But this addition of lime also allows the addition of hydroxide anions necessary for the structure of the hydroxyapatite and the neutralization of H⁺ hydrogenphosphate. This method has the advantage that it allows the synthesis of hydroxyapatite from relatively inexpensive reagents, compared to other methods, and uses relatively mild conditions of synthesis (temperature and pH).

In some embodiment, the synthetized hydroxyapatite in the adsorbent approaches the molar Ca/P hydroxyapatite stoichiometry of 1.67 but generally comprises a Ca/P more than 1.5 and less than 1.67, that is to say, the synthetized hydroxyapatite in the adsorbent is deficient in calcium compared to the stoichiometry. Some of the calcium source (e.g., calcium carbonate when it is used in the first step) which is not utilized in the hydroxyapatite would remain inside the hydroxyapatite adsorbent composition.

In this particular preferred method, the first step is to attack limestone with phosphoric acid at a temperature of from 20 to 25°C to make a brushite type structure. At the end of the addition of acid, the second step is initiated by heating the mixture up to at least 50°C. A suspension of Ca(OH)₂ (such as 25 wt%) is then added to maintain the pH of the suspension at a maximum 8.9. The second step preferably uses an overall Ca/P molar ratio of about 1.67. The goal of this second step is to convert the brushite type structure created in the first step to a hydroxyapatite structure in the second step.

The suspension (B) may be left to cool for 1 to 24 hours, preferably at least 10 hours, down to ambient temperature (generally 20-25°C). This makes it possible to mature the adsorbent and to reduce the residues of MCP/DCP or brushite, or of octacalcium (precipitated during the first step), into hydroxyapatite and into calcium phosphate and calcium hydroxide complexes, within the suspension (B).

Optionally, in the process of making the adsorbent, at the end of the second step, the suspension (B) comprises an aqueous solution (C) and composite particles, and
- in a third step, a portion of the aqueous solution (C) is separated from the suspension (B) in order to obtain an aqueous suspension (D) comprising at least 18% and at most 50% of adsorbent particles, or in order to obtain a wet solid (D') comprising at least 50% and at most 80% of composite particles, or a pulverulent solid (D") comprising at least 80% and at most 95% of adsorbent particles and at least 5% and at most 20% of water.

In a third step, the separation may comprise a dewatering step which increases the solids content. The separation may comprise for example a filter, such as a filter press. This type of separation may provide an aqueous suspension (D) or a wet solid (D') of higher solids content than the suspension (B) taken out of the reactor.

In some embodiments, the method for making the hydroxyapatite adsorbent particles may further comprise drying the suspension (B) or aqueous suspension (D) or wet solid (D') at a temperature between 50 to 180°C, preferably from 80 to 130 °C, or more preferably from 90 to 120 °C, most preferably from 95 to 115 °C.

Drying may comprise any suitable technique suitable for decreasing the water content of the suspension (B) or aqueous suspension (D) or wet solid (D'), such as, but not limited to, spray drying, flash drying, and/or drying in a fluidized bed.

In some embodiments, the method for making the hydroxyapatite adsorbent particles may comprise spray drying the suspension (B) or aqueous suspension (D) to provide a pulverulent solid (D").

Consequently, the present invention also relates to the use of an aqueous suspension (D) comprising at least 25%, preferably at least 40% and at most 50% of adsorbent particles, or to a wet solid (D') comprising at least 50% and at most 80% of adsorbent particles, or a pulverulent solid (D") comprising at least 70%, preferably at least 80%, and at most 95% of adsorbent particles and at least 5% and at most 20% of water.

The adsorbent obtained according to such method is effective for treating the irradiated water effluent contaminated by metallic ions.

### For the solid adsorbent comprising a synthetic hydroxyapatite composite:

The process for producing a hydroxyapatite composite, may comprise the following step:
- in a first step, a source of calcium and a source of phosphate ions are mixed in water in a molar ratio that is adjusted to obtain a Ca/P molar ratio of between 0.5 and 1.6, preferably between 0.7 and 1.3, and reacting the source of calcium with the phosphate ions at a pH of between 2 and 8, in order to obtain a suspension (A) of calcium phosphate,
- in a second step, adding to the suspension (A) an alkaline compound comprising hydroxide ions in order to set a pH of at least 7.5, preferably at least 8, or at least 8.5, or at least 9, or of at least 10; further adding an additional source of calcium in order to obtain a suspension (B) of composite having a Ca/P molar ratio of greater than 1.6, preferably greater than 1.65 to form a hydroxyapatite structure; and
- further adding at least one additive or a precursor thereof in the first step, in the second step, or in both in the first and second steps.

When the additive or precursor thereof is added in the first step, it may be added at the beginning of the first step before the reaction takes place, during the reaction, or after the reaction is completed in the first step (this being preferred).

It is envisioned that the additive or precursor thereof may be added not all at once, for example in at least two portions, for example a first portion in the first step and another portion in the second step.

It is also envisioned that two or more additives or precursors thereof may be added. In an example, a first additive or precursor thereof is added in the first step and a second additive or precursor thereof is added in the second step. Alternatively, the first and second additives or precursors thereof may be added in the first step or in the second step.

Examples of additives or precursors thereof that may be added in the first step include activated carbon and/or chloride salts of iron.

A particular embodiment of the present invention relates to a process for producing the hydroxyapatite composite, comprising:
- in a first step, a source of calcium and a source of phosphate ions are mixed in water in a molar ratio that is adjusted to obtain a Ca/P molar ratio of between 0.5 and 1.6, preferably between 0.7 and 1.3, and reacting the source of calcium with the phosphate ions at a pH of between 2 and 8, in order to obtain a suspension (A) of calcium phosphate, and
- in a second step, adding to the suspension (A) an alkaline compound comprising hydroxide ions in order to set a pH of at least 7.5, preferably at least 8, or at least 8.5, or at least 9, or of at least 10; further adding an additional source of calcium in order to obtain a suspension (B) of composite having a Ca/P molar ratio of greater than 1.6, preferably greater than 1.65, and further adding at least one additive or a precursor thereof, to form a composite material comprising a hydroxyapatite structure.

An alternate embodiment of the present invention relates to a process for producing the hydroxyapatite composite, comprising:
- in a first step, a source of calcium and a source of phosphate ions are mixed in water in a molar ratio that is adjusted to obtain a Ca/P molar ratio of between 0.5 and 1.6, preferably between 0.7 and 1.3, and reacting the source of calcium with the phosphate ions at a pH of between 2 and 8, in order to obtain a suspension (A) of calcium phosphate,

- further adding at least one additive or a precursor thereof during the first step, such as at the beginning of the first step before the reaction takes place, during the reaction, or after the reaction is completed in the first step (this being preferred);
- in a second step, adding to the suspension (A) an alkaline compound comprising hydroxide ions in order to set a pH of at least 7.5, preferably at least 8, or at least 8.5, or at least 9, or of at least 10; further adding an additional source of calcium in order to obtain a suspension (B) of composite having a Ca/P molar ratio of greater than 1.6, preferably greater than 1.65, to form a composite material comprising a hydroxyapatite structure.

Examples of additives or precursors thereof that may be added in the first step include activated carbon and/or chloride salts of iron.

The additive may be added as a precursor of the additive, and this precursor is converted to the form of the additive during the synthesis of the composite in order for the additive to be present in the final composition of the composite. For example, a precursor of the additive may be a salt of iron, and during the synthesis of the composite, the salt of iron is converted to iron hydroxide or oxyhydroxide to generate the additive in the final composition of the hydroxyapatite composite.

In some embodiments, the additive or precursor thereof may be in the form of a solution or a slurry before it is added to at least one of the first and second steps of the method of making the composite.

The additive is preferably incorporated or embedded into or coated onto the hydroxyapatite structure, or otherwise associated with the hydroxyapatite structure via cohesive forces.

In some embodiments, the additive or precursor thereof may be in the form of a solid before it is added to at least one of the first and second steps.

In some embodiments, when the additive or precursor thereof may be in the form of a powder (either sold 'as is' or ground before use), the method of making the composite may further include sieving the powder of the additive or precursor thereof to remove large particles, such as those exceeding a size of 100 microns, or exceeding a size of 90 microns. For example, the powder of the additive or precursor thereof which passes through a sieve No. 170 (under ASTM E11) equivalent to a size of less than 90 microns, or through a sieve No. 200 (under ASTM E11) equivalent to a size of less than 75 microns, or through a sieve No. 230 (under ASTM E11) equivalent to a size of less than 63 microns can be added to at least one of the first and second steps of the method of making the composite.

During the synthesis of apatite structure and more precisely during the second step corresponding to the addition of the hydroxide ions, the pH reaches 8-8.5 to a maximum of 8.9, and this addition becomes more difficult, if not impossible without raising the pH too much. This moment is called "plateau".

The plateau is where the additive is preferably added out at one time, although the addition of additive may be carried out in several increments. However, it is to be understood that the addition of the additive in the second step may be carried out during the same period of time when the hydroxide ions are added (that is to say, before the pH plateau is reached), such as a one-time addition, in several increments, or in a continuous manner.

The additive needs to be present during the hydroxyapatite synthesis but its addition does not have to necessarily take place at the time of the hydroxyapatite synthesis. The additive or a precursor thereof may be added prior to the plateau in the second step, or even before the conversion of the low Ca/P calcium-phosphate compound (such as brushite of Ca/P = 1) formed in the first step to the hydroxyapatite structure formed in the second step. For example, the additive or a precursor thereof may be added before the addition of the hydroxide ions is initiated in the second step. The additive or a precursor thereof may be added even during the first step, particularly if the additive or precursor thereof is compatible with the pH condition of the first step, which is generally less than 7, or less than 6.5, or even less than 6. "Compatible" here means that the additive or precursor thereof added in the first step is not degraded/reacted or otherwise rendered ineffective as an additive for making a hydroxyapatite composite in the second step.

**FIG. 1** represents a schematic process flow diagram of a process according to the invention for treating a water effluent, for example originating from an ore mining process, containing cyanide, metallic ions (such as barium, cadmium, cobalt, copper, iron, manganese, lead, zinc) and metal-cyanide complexes having a stability constant K characterized by a logK at 25°C greater than 20, preferably greater than 30, more preferably greater than 35, where K is the constant for the equilibrium between the metal-cyanide complex and the free metal ion and cyanide ion (such as hexacyanoferrate(II), hexacyanoferrate(III), hexacyanocobaltate(III), tetracyanonickelate(II), tetracyanocuprate(II), or combinations thereof). The water effluent may also comprise organics.

This process includes a UV/H₂O₂ unit 10, an adsorption unit 20 (for metals/organics removal), and a separation unit 30 (for solids removal). A H₂O₂ source 50 is fed to the UV/H₂O₂ unit 10 which comprises a UV lamp, preferably emiting UV-C, preferably with a wavelength from 200 to 290 nm. A water effluent 40 to be treated enters the UV/H2O2 unit 10 under suitable peroxidation conditions as described herein to form an irradiated effluent 60. The irradiated effluent 60 is directed to the adsorption unit 20 while fresh solid adsorbent 70 comprising apatite (preferably hydroxyapatite) is fed to this unit in order for metallic ions to be removed from the irradiated effluent. The treated effluent which is contacted with the solid adsorbent exiting the adsorption unit 20 is fed to the separation unit 30 where the solids are separated from the liquid phase. A treated water 90 exits the separation unit 30 while a stream 100 containing separated solids can be directed at least in part back to the adsorption unit 20 (recycle), while a portion 110 of the stream 100 containing separated solids is purged out of the process. The entry point of the recycled solids into the adsorption unit 20 may be the same as the fresh adsorbent 70, or may be different. An optional pH adjustment step may be done on the irradiated effluent 60 before entering the adsorption unit 20. An optional acid addition 115 may be carried out in order to reduce the pH of the irradiated effluent 60 to a value from 7 to 9, preferably from 7.5 to 8.8, yet more preferably from 7.5 to 8.5

**FIG. 2** represents another schematic process flow diagram of a process according to the invention for treating a water effluent originating from an ore processing process, containing cyanide, metallic ions (such as barium, cadmium, cobalt, copper, iron, manganese, lead, zinc) and metal-cyanide complexes having a stability constant K characterized by a logK at 25°C greater than 20, preferably greater than 30, more preferably greater than 35, where K is the constant for the equilibrium between the metal-cyanide complex and the free metal ion and cyanide ion (such as hexacyanoferrate(II), hexacyanoferrate(III), hexacyanocobaltate(III), tetracyanonickelate(II), tetracyanocuprate(II), or combinations thereof). The water effluent may also comprise organics. This process is similar to what is shown in **FIG. 1** except that the adsorption (for metals/organics removal) and the separation are combined into one single unit 120. The UV/H₂O₂ treatment proceeds as previously described in **FIG. 1** in unit 10 and the irradiated effluent 60 is directed to this adsorption + separation unit 120. Preferably, the unit 120 includes a settler, where fresh solid adsorbent is fed generally in a zone of the settler which allows sufficient time of contact of the apatite with the metallic ions and optionally organic contaminants. It is preferred that the addition of the fresh adsorbent is carried out away from the treated water outlet of the unit 120 in order to avoid bypass of the fresh solids into the treated water 90. The separation is effective in settling the solids originating from the spent adsorbent and also the particles of metal hydroxides that may form from the metal(s) extracted from the metal-cyanide complexes during the UV/H₂O₂ treatment in unit 10. The stream 100 containing separated solids can be directed at least in part back to the adsorption + separation unit 120 (recycle), while a portion 110 of the stream 100 containing separated solids is purged out of the process. The entry point of the recycled solids to unit 120 may be the same as the entry point of fresh adsorbent 70, or may be different. As previously described, there may be an optional pH adjustment step on the irradiated water 60 before entering the adsorption + separation unit120 by the optional acid addition 115 in order to reduce the pH to a value from 7 to 9, preferably from 7.5 to 8.5.

**FIG. 3** represents another schematic process flow diagram of a process according to the invention for treating a water effluent originating from an ore mining process, containing cyanide, metallic ions and stable metal-cyanide complexes, and optionally organics. This process is similar to what is shown in **FIG. 1** except that the UV/H₂O₂ step and the adsorption step (for metals/organics removal) are carried out into one combined unit 210. The UV/H₂O₂ treatment and the adsorption step proceed as previously described in **FIG. 1** except that because these two steps are done in the same unit 210. The pH selected for this UV peroxidation in unit 210 must be compatible with the operational pH of the metals/organics removal step. The separation in unit 30 is effective in settling the solids originating from the adsorbent and also the particles of metal hydroxides that may form from the metal(s) extracted from the metal-cyanide complexes during the UV/H₂O₂ treatment in combined unit 210. The stream 100 containing separated solids exiting the separation unit 30 can be directed at least in part back to the combined unit 210 (recycle), while a portion 110 of the stream 100 containing separated solids is purged out of the process. The entry point of the recycled solids to combined unit 210 may be the same as the fresh adsorbent 70, or may be different. There may be an optional pH adjustment on the water effluent 40 before entering the combined UV/H₂O₂ + adsorption unit 210 by an optional acid addition 215 in order for the pH of the water effluent 40 entering the unit 210 to be a value from 8 to 11, preferably from 8.5 to 10 suitable for both UV peroxidation and adsorption of metals and optionally organics on the solid adsorbent comprising apatite in the combined unit 210.

In particular the present invention relates to the following embodiments.
**ITEM 1.** A process for treating a water effluent, preferably originating from a ore mining process, containing cyanide, metallic ions and metal-cyanide complexes having a stability constant K characterized by a logK at 25°C greater than 20, preferably greater than 30, more preferably greater than 35, where K is the constant for the equilibrium between the metal-cyanide complex and the free metal ion and cyanide ion, said method comprising:
   - irradiating the water effluent at a pH greater than 7, preferably greater than 8 with ultraviolet light in the presence of a peroxygen at a selected wavelength to form an irradiated effluent, wherein at least one of said metal-cyanide complexes undergoes photo-dissociation and liberates free cyanide ligand from the complex in order for the free cyanide to be converted to cyanate (and optionally for the metal from the complex to be converted to an hydroxide form);
   - contacting the irradiated effluent with a solid adsorbent comprising apatite to remove from the irradiated effluent at least part of said metallic ions to form a treated effluent; and
   - separating the treated effluent from the solid adsorbent.
**ITEM 2.** The process of **ITEM 1,** wherein the pH during irradiation is greater than 7 and up to 11, preferably from 8 to 11, more preferably from 8.5 to 10.5, yet more preferably from 9 to 10.5, even more preferably from 9.5 to 10.5, most preferably from 10 to 10.5.
**ITEM 3.** The process of any of the preceding **ITEMS,** wherein the at least one metal-cyanide complex which undergoes photo-dissociation contains a metal in the complex selected from the group consisting of Fe(II), Fe(III), Co(II), Ni(II), Cu(I), Cu(II), and Hg(II), preferably selected from the group consisting of Fe(II), Fe(III), Co(II), Cu(I), Cu(II), and Ni(II).
**ITEM 4.** The process of any of the preceding **ITEMS,** wherein said metal-cyanide complex which undergoes photo-dissociation is selected from the group consisting of hexacyanoferrate(II), hexacyanoferrate(III), hexacyanocobaltate(III), tetracyanonickelate(II), tetracyanocuprate(II), and combinations thereof.
**ITEM 5.** The process of any of the preceding **ITEMS,** wherein during irradiating, the ultraviolet light has a wavelength in the region from 200 to 375 nm, preferably from 200 to 350 nm, more preferably from 200 to 300 nm, most preferably at 254 nm, or the ultraviolet light is emits by a UV-C lamp, preferably with a wavelength from 200 to 290 nm, preferably in order for the metal-cyanide complexes to undergo photo-disassociation and for the peroxygen to form hydroxyl radicals.
**ITEM** 6. The process of any of the preceding **ITEMS,** wherein the irradiating with ultraviolet light is carried out for at least 5 minutes and preferably less than 30 min.
**ITEM** 7. The process of any of the preceding **ITEMS,** wherein the irradiating with ultraviolet light is carried out with a Hg lamp with a minimum electric rating of 8 W, preferably a low pressure UV Hg lamp with an electric rating from 8 to 100 W.
**ITEM** 8. The process of any of the preceding **ITEMS,** wherein the irradiating step with ultraviolet light further forms particles of metal hydroxides with the metal liberated from said metal-cyanide complex, and wherein the process further includes removing said particles of metal hydroxides from the treated effluent in said separating step or removing said particles of metal hydroxides from the irradiated effluent in a different separation step prior to contacting with the solid adsorbent.
**ITEM** 9. The process of any of the preceding **ITEMS,** wherein the peroxygen used during the irradiating step comprises or consists of H₂O₂, and wherein H₂O₂ is used in a molar ratio of at least 2:1, preferably at least 5:1, more preferably at least 10:1, compared to cyanide in the effluent which is free and which can be liberated from one or more of said metal-cyanide complexes during UV irradiation.
**ITEM** 10. The process of any of the preceding **ITEMS,** wherein the adsorbent comprises a calcium-deficient hydroxyapatite with a Ca/P ratio more than 1.5 and less than 1.67, preferably wherein the calcium-deficient hydroxyapatite is synthetically made.
**ITEM** 11. The process of **ITEM** 10, wherein the adsorbent further comprises calcium carbonate in an amount between 0.5 to 20 wt% and/or contains less than 1 wt% Ca(OH)₂.
**ITEM** 12. The process of any of the preceding **ITEMS,** wherein the solid adsorbent comprises a synthetic hydroxyapatite composite, said synthetic hydroxyapatite composite comprising a hydroxyapatite and at least one additive which is present during the hydroxyapatite synthesis.
**ITEM** 13. The process of **ITEM** 12, wherein the at least one additive in the synthetic hydroxyapatite composite is embedded or incorporated into or coated onto the hydroxyapatite.
**ITEM** 14. The process of **ITEM 12 or 13,** wherein the at least one additive comprises at least one activated carbon, iron (such as in the form of metal, salt, oxide, oxyhydroxide, or hydroxide), or combinations thereof.
**ITEM** 15. The process of any of **ITEM 12-14,** wherein the solid adsorbent comprises:
   - two or more synthetic hydroxyapatite composites, wherein the additives in the synthetic hydroxyapatite composites are different; preferably wherein at least one of the additives in a first synthetic hydroxyapatite composite comprises an activated carbon or blend of two or more activated carbons, and another additive in a second synthetic hydroxyapatite composite comprises iron (such as in the form of metal, salt, oxide, oxyhydroxide, or hydroxide); or
   - a blend of at least one synthetic hydroxyapatite composite and a synthetic hydroxyapatite made without additive, wherein the at least one additive in the synthetic hydroxyapatite composite comprises at least one activated carbon, iron (such as in the form of metal, salt, oxide, oxyhydroxide, or hydroxide), or combinations thereof.
**ITEM** 16. The process of any of the preceding **ITEMS,**, wherein the contacting step with the adsorbent comprising apatite is carried out at a pH from 6.5 to 10, preferably a pH from 7 to 9.5, more preferably a pH from 7 to 9, yet more preferably a pH from 7.2 to 8.8, still more preferably a pH from 7.5 to 8.8, yet still more preferably a pH from 7.5 to 8.5.
**ITEM** 17. The process of any of the preceding **ITEMS,** wherein the contacting step with the adsorbent comprising apatite is carried out by mixing the solid adsorbent in the irradiated effluent with a content from 1 to 10 wt% of solid adsorbent, preferably from 2 to 5 wt% of solid adsorbent.
**ITEM** 18. The process of any of the preceding **ITEMS,** further comprising reducing the pH of the irradiated effluent with an acid (such as sulfuric acid or hydrochloric acid) before contacting with the solid adsorbent.
**ITEM** 19. The process of any of the preceding **ITEMS,** wherein the contacting with the adsorbent is carried out in a mixed tank or a tank where the water effluent is circulated, and wherein the solid adsorbent is in the forms of particles which are suspended in the irradiated effluent in the tank.
**ITEM** 20. The process of any of **ITEMS 1-19,** wherein the contacting with the solid adsorbent and the irradiating step are carried out in different units.
**ITEM** 21. The process of any of **ITEMS 1-19,** wherein the contacting with the adsorbent (adsorption) and the irradiating step are carried out in a same unit.
**ITEM** 22. The process of **ITEM** 21, wherein the combined irradiating step with UV and the contacting step with solid adsorbent (adsorption) are carried out at a pH from 7 to 10 or from 7.5 to 10, or from 8 to 10, preferably a pH from 8to 9.5 or from 8.5 to 9.5, more preferably a pH from 8.5 to 9.
**ITEM** 23. The process of any of **ITEMS 1-19,** wherein the contacting step with the adsorbent (adsorption step) and the separation step are carried out in a same unit, preferably wherein the unit is a settler and wherein the solid adsorbent is added to the settler in a zone to allow contact with the treated effluent to remove the metallic ions and for the solid adsorbent to settle after contact.
**ITEM** 24. The process of any of the preceding **ITEMS,** wherein contacting the irradiated effluent (adsorption step) with a solid adsorbent comprising apatite is effective to remove at least part of said metallic ions containing one or more metals selected from the group consisting of Al, Ag, Ba, Be, Ce, Co, Cd, Cu, Cr, Fe, Hg, La, Li, Mn, Mg, Mo, Ni, Pb, Pd, Rb, Sb, Sn, Sr, Th, Ti, U, V, Y, Zn, As, B, F, Se, and combinations thereof.
**ITEM** 25. The process of any of the preceding **ITEMS,** wherein the water effluent further comprises organic contaminants, particularly those of PAHs, phenolic compound, naphtol and derivatives, and wherein the contacting step (adsorption step) removes at least a portion of said organic contaminants.
**ITEM** 26. The process of any of the preceding **ITEMS,** wherein separating the treated effluent includes settling.
**ITEM** 27. The process of any of the preceding **ITEMS,** wherein separating the treated effluent includes adding a flocculant to the treated effluent before or during settling.
**ITEM** 28. The process of any of the preceding **ITEMS,** wherein the peroxygen used during the irradiating step comprises or consists of H₂O₂, and wherein the H₂O₂ content in the effluent is from 10 to 1,000 ppm, preferably from 25 to 750 ppm, preferably from 40 to 500 ppm, yet more preferably from 50 to 400 ppm.
**ITEM** 29. The process of **ITEM 28,** wherein H₂O₂ is injected periodically into a circulation loop hydraulically connected to a photoreactor where the irradiation takes place or to a tank in such a circulation loop in order for H₂O₂ content in the effluent to be from 10 to 1,000 ppm, preferably from 25 to 750 ppm, preferably from 40 to 500 ppm, yet more preferably from 50 to 400 ppm.

### EXAMPLES

The examples, the description of which follows, serve to illustrate the invention.

In these examples, the pH measurements were made using a WTW Sentix 41 electrode (pH 0-14, temperature: 0 °C-80 °C), a pH meter WTW pH3110. The calibration of the equipment was made using three buffer solutions: at pH 4.0 (batch Dulco test-0032) Prominent, a WTW pH 7.0 (WTW D-82362) and at pH 10.01 Hach (cat 27702). Note: If multiple sample measurements were to be made with the same electrode, the electrode was rinsed with deionized water between each measurement.

The particle size measurement was carried out on a Beckman Coulter LS 230 laser diffraction particle size analyser (laser of wavelength 750 nm) on particles suspended in water and using a size distribution calculation based on Fraunhofer diffraction theory (particles greater than 10 µm) and on Mie scattering theory (particles less than 10 µm), the particles being considered to be spherical.

The BET specific surface area was determined by gas adsorption on a Micromeritics ASAP2020 machine. Before the analysis, the samples (0.7 to 1 g) are pretreated under vacuum at 250°C until a stable vacuum of 4-5 µbar has been achieved. The measurements were carried out using nitrogen as adsorbent gas at 77°K via the volumetric method, according to the ISO 9277: 2010 standard (Determination of the specific surface area of solids by gas adsorption - BET method). The BET specific surface area was calculated in a relative pressure (P/P0) range varying from around 0.05 to 0.20.

Unless stated otherwise, analysis of metal contents in water samples was carried out after the samples were filtered with a 0.45 µm filter by Inductively Coupled Plasma Mass Spectrometry (ICP-MS).

### Example 1

### Synthesis of apatite-containing adsorbents

### la. Synthesis of hydroxyapatite adsorbent (without additive)

In this example, a hydroxyapatite material was made under similar conditions as those described in example 1b of WO2015/173437 patent application by SOLVAY SA. This hydroxyapatite (to be used as adsorbent) is labelled "HAP₁". The process used two steps. In the first step, limestone was dispersed in water at 20-25°C in a 5-liter reactor (with baffles). Then H₃PO₄ (75%) was added to this suspension and the mixture was stirred at 700 rpm. The first step used an overall Ca/P molar ratio of about 1. The goal of this first step was to attack the limestone to make a brushite type structure. At the end of the addition of acid, the second step was initiated by heating the mixture up to about 50°C. A 25 wt% suspension of Ca(OH)₂ was then added to maintain the pH of the suspension at a maximum 8.9. The second step used an overall Ca/P molar ratio of about 1.67. The goal of this second step was to convert the brushite type structure created in the first step to a hydroxyapatite structure in the second step. The reaction time was 120 minutes (2 hrs). After the reaction time, the suspension was continually stirred at half the stirring speed than was used in the first step to allow it to cool down to 20-25°C.

### 1.b. Synthesis of hydroxyapatite composite with activated carbon

A hydroxyapatite composite with activated carbon (additive) was made using Pulsorb C from Chemviron as the source of activated carbon. The content of activated carbon in the hydroxyapatite composite was about 10% by weight. This hydroxyapatite composite (to be used as adsorbent) is labelled "BHAP₁".

The preparation of the composite with activated carbon (BHAP₁) was carried out in a similar manner as in the **Example 1.a.,** except that the activated carbon was added during the synthesis of the hydroxyapatite during the lime addition step (2^{nd} step) after the pH had risen to about 8-9 and after the reaction medium was heated to +/- 50 °C. The activated carbon was added in the form of a powder. The reactor used for this synthesis was a baffled 200-L reactor. No significant change during the synthesis of the composite (compared to the synthesis as described in **Example 1.a.**) is noted apart from this addition of activated carbon during the pH plateau in the 2^{nd} step.

The solid portion of the suspension in the second step remained the same, at about 18wt% by weight. The pH used for the making of the composite was similar to that of hydroxyapatite without additive, namely a range between pH 6.5 and 12, and preferred being maintained between 8 and 9. For the BHAP₁ sample, the temperature for the first step was 20°C and the temperature for the second step was maintained at 50°C.

### 1.c. Porosity and particle size

The porosity characteristics of the HAP₁ sample (without additive) and BHAP₁ composite (with activated carbon "A.C.") are reported in **TABLE 2.**

**TABLE 2**

| Ref. No. | wt% A.C. | Temp. 2^{nd} step | Reactor | Particle size D50 µm | Pore Volume cm³/g | S_{BET} m²/g |
|---|---|---|---|---|---|---|
| HAP₁ | 0 | 50°C | 5-L; 700 rpm | 41.4 | 0.39 | 118 |
| BHAP₁ | 10 | 50°C | 200-L | 43.8 | 0.43 | 168 |

### Example 2 (not in accordance to the invention)

### Adsorption of metal contaminants from ore processing water without prior UV peroxidation treatment

The effectiveness of adsorption of metals on the HAP₁ adsorbent was tested on two ore processing water effluents: WW1 and WW2. The various metal contents of these industrial water samples WW1 and WW2 were measured by ICP-MS and are provided before treatment and after the adsorption with HAP₁ adsorbent in **TABLE 3.** These samples were not treated by UV peroxidation before adsorption. The % removal for Cu, Fe, and Ni was calculated from the metal contents measured before and after adsorption with HAP₁ of WW1 and WW2 and typical % removal values for these 3 metals are also provided for comparison in **TABLE 3.**

**TABLE 3**

| Metals | % removal from WW1 | % removal from WW2 | Typical** % removal in wastewater on HAP₁ adsorbent |
|---|---|---|---|
| Cu | 19% | 8% | > 90% |
| Fe | 11% | 12% | > 90% |
| Ni | 0% | 3% | > 90% |

| | | | |
|---|---|---|---|
| ** *% removal data on water sample from metal recuperation and water sample from powder coating of metals from Figures in* « EVALUATION OF EFFICIENCY OF Capterall™ FOR THE REMOVAL OF HEA VYMETALS ON INDUSTRIAL WASTEWATER », April 2015, by Vito NV, available online at https:llwww.solvay.com/en/binaries/Capterall%20Vito%20Study-337050.pdf. | | | |

It was observed that in these ore processing effluents WW1 and WW2, the adsorption on hydroxyapatite adsorbent HAP₁ was much less efficient (from 0 to 19 % removal) than what would be typically observed % removal (> 90) for Cu, Fe, and Ni.

Based on this assessment, it was believed that these metals may have been complexed with cyanide in the water effluents WW1 and WW2, making for instance some moderately strong and strong metal cyanide complexes in anionic form with iron, nickel and copper. It appeared that these ionic complexes were difficult to remove by contacting with a hydroxyapatite adsorbent. An adsorption step carried out alone would not be successful in reducing these metals content in these water effluents before discharge without breaking these complexes down to liberate the core metal ions from the complexes.

### Example 3 (in accordance to the invention)

### UV/H₂O₂ treatment followed by adsorption for removal of cyanide and metal contaminants from ore mining waters

The removal of cyanides and metal contaminants was tested on the same two ore processing waters WW1 and WW2, wherein the removal of cyanides was carried out in a UV/H₂O₂ unit, and after a pH adjustment, the irradiated effluent sample was directed to an adsorption either with HAP₁ adsorbent or with BHAP₁ adsorbent comprising 10 wt% Pulsorb C activated carbon (see

### Examples 1.a and 1.b).

Schematically, the tests were carried out in a method similar to what is illustrated in **FIG.1****.** About 1.5 liters of a water effluent (WW1 or WW2) was placed in a UV/H₂O₂ reactor at a pH of about 9.5. This alkaline pH was selected to avoid the release of HCN gas during this UV/H₂O₂ treatment. The mixing in this reactor was done by recirculating a portion of the effluent with an external pump in order to homogenize the reactor content. The UV/H₂O₂ treatment was carried out for 1 hour residence time using a low pressure UV Hg light operated at 95W and at a wavelength of 254 nm. A solution of H₂O₂ (about 30 wt% with a density of 1.1) was added to the UV/H₂O₂ reactor in increments, that is to say adding an equal portion (1/3) 3 times during the course of the UV/H₂O₂ reaction, first at time 0, then at time = 15 min and finally at time=30 minutes. Two H₂O₂:CN molar ratios were tested at 5:1 and 10:1.

After a residence time of 1 hour, a portion (1 liter) of the irradiated water was extracted from the initial 1.5 L. The pH of this 1-L irradiated water was adjusted to 7.6 by addition of hydrochloric acid (1 N).

A first portion (400 ml) of this pH-adjusted effluent was used for carrying out the adsorption test with 2 wt% of the solid adsorbent HAP₁, and another portion (400 ml) of this pH-adjusted effluent was used for carrying out the adsorption test with 2 wt% of the solid BHAP₁ adsorbent (hydroxyapatite composite). The pH at the end of these two adsorption steps was about 8.1-8.2.

Aliquots of these various waters were taken out for analysis of metal contents by ICP-MS. Each of these aliquots was filtered through a 0.45 micron membrane before the metal content was measured.

WW1 had an initial free CN content of 5.8 mg/l and an initial pH of 9.4.

WW2 had an initial free CN content of 8 mg/l and an initial pH of 9.6.

For the treatment of WW1 and WW2, **TABLE 4** and **TABLE 5** respectively provide the content of several metals (Ba, Cu, Fe, Mn, Ni, Se, Zn) measured by ICP-MS of WW1 and WW2 at different stages of the process:
1. "as is' before being exposed to UV/ H₂O₂,
2. after being treated by the UV/H₂O₂,
3. after the irradiated solution being contacted with HAP₁ or
4. after the irradiated solution being contacted with BHAP₁.

The % removal in **TABLES 4 & 5** was calculated based on the difference of the measured value (2) of the metal content after the UV/H₂O₂ treatment and the value measured after the adsorption test (3 for HAP₁) or (4 with BHAP₁) divided by the same measured value (2).

It was observed that there was not much impact of the H₂O₂:CN ratio (either 5 or 10) on the % removal for each metal.

### For the treatment of WW1:

For Ba removal according to the process of the present invention, the % removal was high in the 95-96 % with the BHAP₁ (composite) adsorption and with HAP₁ adsorption.

For Cu removal according to the process of the present invention, the % removal was high in the 97 % with the BHAP₁ (composite) adsorption but the % removal was poor (15% & 21%) with HAP₁ adsorption.

For Fe removal according to the process of the present invention, the % removal was high in the 98 % for either of BHAP₁ (composite) and HAP₁ adsorptions.

For Mn removal according to the process of the present invention, the % removal was high in the 92-98 % for either of BHAP₁ (composite) and HAP₁ adsorptions.

For Ni removal according to the process of the present invention, the % removal was high in the 93 % with the BHAP₁ (composite) adsorption, but there was no removal (0%) with HAP₁ adsorption.

For Se removal according to the process of the present invention, the % removal was moderately low in the 62-65% with the BHAP₁ (composite) adsorption but the % removal was lower (42-46 %) with HAP₁ adsorption.

For Zn removal according to the process of the present invention, the % removal was high in the 92-93 % with the BHAP₁ (composite) adsorption and with HAP₁ adsorption.

**TABLE 4 : treatment of WW1**

| **H₂O₂:CN** | **mg/l** | **Ba** | **Cu** | **Fe** | **Mn** | **Ni** | **Se** | **Zn** |
|---|---|---|---|---|---|---|---|---|
| | Before any treatment | 0.15 | 0.52 | 0.76 | 0.11 | <0.1 | 0.1 | <0.1 |
| 10 | After UV+H₂O₂ treatment | 0.074 | 0.85 | 0.532 | 0.084 | 0.075 | 0.09 | 0.070 |
| | After pH adjustment to 7.6 | 0.071 | 0.83 | 0.484 | 0.081 | 0.074 | 0.09 | 0.063 |
| | After treatment with HAP₁ | **0.003** | 0.72 | **0.011** | 0.007 | 0.075 | 0.05 | 0.005 |
| | **% metal removal** | **96%** | 15% | **98%** | **92%** | 0% | **44%** | **93%** |
| | After treatment with BHAP₁ | 0.003 | 0.028 | 0.008 | 0.002 | <0.005 | 0.03 | <0.005 |
| | **% metal removal** | **96%** | **97%** | **98%** | **98%** | **93%** | **62%** | **93%** |
| | | | | | | | | |
| 5 | After UV+H₂O₂ treatment | 0.080 | 0.83 | 0.450 | 0.075 | 0.074 | 0.08 | 0.072 |
| | After pH adjustment to 7.6 | 0.075 | 0.79 | 0.400 | 0.071 | 0.071 | 0.08 | 0.064 |
| | After treatment with HAP₁ | 0.004 | 0.66 | 0.007 | 0.006 | 0.079 | 0.05 | 0.006 |
| | **% metal removal** | **95%** | 21% | **98%** | **92%** | 0% | **46%** | **92%** |
| | After treatment with BHAP₁ | 0.003 | 0.028 | 0.007 | 0.002 | <0.005 | 0.03 | <0.005 |
| | **% metal removal** | **96%** | **97%** | **98%** | **97%** | **93%** | **65%** | **93%** |

### For the treatment of WW2:

For Ba removal according to the process of the present invention, the % removal was high in the 89-96 % with the BHAP₁ (composite) adsorption and with HAP₁ adsorption.

For Cu removal according to the process of the present invention, the % removal was moderate in the 54-55 % with the BHAP₁ adsorption but the % removal was very poor (11% & 9%) with HAP₁ adsorption.

For Fe removal according to the process of the present invention, the % removal was moderate in the 41-42 % with the BHAP₁ adsorption but the % removal was very poor (26-27%) with HAP₁.

For Mn removal according to the process of the present invention, the % removal was high in the 87-90 % with the BHAP₁ (composite) adsorption and with HAP₁ adsorption.

For Ni removal according to the process of the present invention, the % removal was high in the 85-90 % with the BHAP₁ adsorption but the % removal was poor (5%) with HAP₁ adsorption.

For Se removal according to the process of the present invention, the % removal was moderately low in the 33-46% with the BHAP₁ and HAP₁ adsorption.

For Zn removal according to the process of the present invention, the % removal was very high in the 99-100 % with the BHAP₁ (composite) adsorption and with HAP₁ adsorption.

**TABLE 5: treatment of WW2**

| H₂O₂: CN | **mg/l** | **Ba** | **Cu** | **Fe** | **Mn** | **Ni** | **Se** | **Zn** |
|---|---|---|---|---|---|---|---|---|
| | Before any treatment | 0.18 | 1.4 | 23,0 | 0.98 | 0.79 | 0.26 | 6.1 |
| 10 | After UV+ H₂O₂ treatment | 0.095 | 3.9 | 18.0 | 0.108 | 0.76 | 0.10 | 4.07 |
| | After pH adjustment to 7.6 | 0.091 | 3.5 | 12.2 | 0.224 | 0.71 | 0.09 | 0.150 |
| | After treatment with HAP ₁ | 0.004 | 3.5 | 13.3 | 0.012 | 0.72 | 0.07 | 0.019 |
| | **% metal removal** | **96%** | 11% | 26% | **89%** | 5% | **33%** | **100%** |
| | After treatment with BHAP₁ | 0.010 | 1.8 | 10.4 | 0.014 | 0.11 | 0.06 | 0.010 |
| | **% metal removal** | **89%** | **54%** | **42%** | **87%** | **85%** | **41%** | **100%** |
| | | | | | | | | |
| 5 | After UV+ H₂O₂ treatment | 0.157 | 2.8 | 18.8 | 0.102 | 0.72 | 0.10 | 3.76 |
| | After pH adjustment to 7.6 | 0.144 | 2.4 | 12.8 | 0.123 | 0.66 | 0.09 | 0.616 |
| | After treatment with HAP ₁ | 0.007 | 2.5 | 13.7 | 0.010 | 0.68 | 0.06 | 0.020 |
| | **% metal removal** | **96%** | 9% | 27% | **90%** | 5% | 40% | **99%** |
| | After treatment with BHAP₁ | 0.013 | 1.2 | 11.0 | 0.010 | 0.10 | 0.05 | 0.009 |
| | **% metal removal** | **92%** | **55%** | **41%** | **90%** | **86%** | **46%** | **100%** |

### Example 4

### Synthesis of apatite-containing adsorbents

### 4.a. Synthesis of hydroxyapatite adsorbent (without additive)

Another hydroxyapatite material labelled "HAP₂" was made in the similar manner as previously described for **Example 1.a,** except that the synthesis was arried out in a 200-L vessel, the same vessel as described in **Example 1.b.**

### 4.b. Synthesis of hydroxyapatite composite with activated carbon

Another hydroxyapatite composite labelled "BHAP₂" containing activated carbon (additive) was made using 10 wt% Pulsorb C from Chemviron in the same manner as previously described for **Example 1.b** in the same 200-L vessel.

### 4.c. Porosity and particle size

The porosity characteristics of the HAP₂ sample (without additive) and BHAP₂ composite (with activated carbon "A.C.") are reported in **TABLE 6.**

**TABLE 6**

| Ref. No. | Wt% A.C. | Temp. 2^{nd} step | Reactor | Particle size D50 µm | S_{BET} m²/g |
|---|---|---|---|---|---|
| HAP₂ | 0 | 50°C | 200-L | 25.7 | 71 |
| BHAP₂ | 10 | 50°C | 200-L | 25.5 | 121 |

### Example 5 (not in accordance to the invention)

### Adsorption of metal contaminants from ore processing waters without UV/H₂O₂ pretreatment

The effectiveness of adsorption of specific metals (Co, Cu, Fe, and Ni) on the HAP₂ and BHAP₂ adsorbents (see **examples 4.a and 4.b)** was tested on two ore processing water effluents: WW3 and WW4.

The adsorption step was carried out as follows. In a 200-ml water sample, 7 g HAP₂ (or 7.1g BHAP₂) were mixed for 1 hour at 10 rpm at a pH of 8.8 (corresponding to an equivalent loading of 20 g of dry matter/L) following by decantation for 10 minutes, and the supernate water was filtered using a 45-µm syringe filter before measuring the metal contents.

The various metal contents were measured by ICP-MS and the results are provided before any treatment and after the adsorption with HAP₂ and BHAP₂ adsorbents in **TABLE 7** for the water sample WW3 and in **TABLE 8** for the water sample WW4. These samples were not treated by UV peroxidation before adsorption. The % removal for Co, Cu, Fe, and Ni was calculated from the metal contents measured before (initial content) and after adsorption (final content) with HAP₂ and BHAP₂ of the ore processing water effluents WW3 and WW4, dividing by their respective initial content.

**TABLE 7**

| Samples | Metals | | | | | | | |
|---|---|---|---|---|---|---|---|---|
| | **Co** | | **Cu** | | **Fe** | | **Ni** | |
| | µg/L | % removal | µg/L | % removal | µg/L | % removal | µg/L | % removal |
| WW3 - unfiltered | 41 | 0% | 299 | 0% | 27 | 0% | 50 | 0% |
| WW3 - filtered | 42 | -2 % | 302 | -1 % | 17 | 37 % | 51 | -2 % |
| WW3+ HAP₂ | 41 | 0 % | 285 | 5 % | 7 | 74 % | 52 | -4 % |
| WW3 + BHAP₂ | 42 | -2 % | 20 | 93 % | 7 | 74 % | 0 | 100 % |

As observed previously, the hydroxyapatite HAP₂ had very limited activity because it only treats significantly the Fe with removal of 74 %. A Cu reduction of 5% was also observed but remained low in comparison with the amount of Cu present in the water sample WW3.

The contact with HAP₂ was ineffective on Co and Ni.

The hydroxyapatite composite BHAP₂ had better processing capabilities for Ni, Cu and Fe present in the water sample WW3 with respectively 100%, 93% and 74% removal, respectively.

No Co removal with BHAP₂ was observed for the water sample WW3 which was not pretreated with UV peroxidation.

It should also be noted that the filtration of WW3 removed 37% of the Fe species which means that Fe was present in soluble form but also in the form of suspended solids.

**TABLE 8**

| **SAMPLES** | Metals | | | | | | | |
|---|---|---|---|---|---|---|---|---|
| | **Co** | | **Cu** | | **Fe** | | **Ni** | |
| | µg/L | % removal | µg/L | % removal | µg/L | % removal | µg/L | % removal |
| WW4 - Non filtered | 38 | 0% | 214 | 0% | 9 | 0 % | 44 | 0 % |
| WW4-Filtered | 37 | 3 % | 271 | -27 % | 12 | -33 % | 42 | 5 % |
| WW4+ HAP₂ | 44 | -16 % | 11 | 95 % | 11 | -22 % | 12 | 73 % |
| WW4 + BHAP₂ | 43 | -13 % | 8 | 96% | 8 | 11 % | 12 | 73 % |

For the water sample WW4, the use of HAP₂ resulted in a removal of 95% for Cu and 73% for Ni. This is in contrast with what was observed for WW3 when HAP₂ could not remove these metals.

BHAP₂ resulted in a removal of 96% for Cu and 73% for Ni from WW4, and these removals were similarly (albeit slightly lower) for Cu and Ni compared to the WW3, to what was observed with HAP₂.

Both HAP₂ and BHAP₂ were ineffective at removing Fe and Co from the water sample WW4.

The improved efficiency of removal for Ni and Cu from WW4 and the inefficacy for Fe from WW4 may be due to a change in the balance of complexation of these metallic elements.

### Example 6 (in accordance to the invention)

### UV/H₂O₂ treatment of an ore processing water followed by adsorption

Tests were carried out in a 316-stainless steel 1.7-liter photoreactor in which a UV-C lamp was inserted. The UV lamp used in the photoreactor was a Philips 95W UV-C lamp (with a UV-C power of 27W), respectively. In the center of the reactor, the UV lamp was protected from the water effluent by a quartz sheath. The reactor was equipped with a jacket to regulate the temperature of the water effluent inside the photoreactor.

During the tests, there was a loop connecting the reactor to a buffer tank permitting a recirculation of the water effluent (up to 4 hours depending on the tests) using a recirculation pump between the reactor and the buffer tank. A volume of 2.4 L in the buffer tank allowed a 30 L/h flow rate in the loop.

For the tests including H₂O₂, a 30 wt% H₂O₂ solution was injected into the buffer tank to achieve a certain concentration of H₂O₂ in the effluent entering the photoreactor, and the H₂O₂ was mixed for about 1 minute in the tank before the recirculation pump was started.

After a given time for UV peroxidation to take care (generally about 240 minutes of recirculation), a 200-ml aliquot was withdrawn from the tank and submitted to adsorption as described in **Example 5.** In the 200-ml water aliquot, about 7 g HAP₂ or BHAP₂ were mixed for 1 hour at 10 rpm at a pH of 8.8 (corresponding to an equivalent loading of 20 g of dry matter/L) following by decantation for 10 minutes, and the aqueous supernate was filtered using a 45-µm syringe filter before measuring the metal contents via ICP-MS.

To determine the UV dose received by the effluent, it was important to correctly reference the flow rate and the volume of solution. It was also important to ensure that during recirculation and injections of H₂O₂, the buffer tank was well stirred to avoid dead volume (i.e., zones that did not circulate in the reactor) and in order to disperse the H₂O₂ homogeneously.

A final water aliquot after the adsorption step was filtered using a 0.45 µm syringe filter for analysis of metals via ICP-MS.

The % removal in **TABLES 9 & 10** was calculated based on the difference of the initial value of the various metal contents measured by ICP-MS in the ore processing water effluent WW3 prior to any treatment and the final value obtained after the adsorption (**TABLE 9** with HAP₂ & **TABLE 10** with BHAP₂) divided by the same initial value. The UV peroxidation step in this example lasted 240 minutes (4 hours).

**TABLE 9**

| **SAMPLES** | Conditions of Treatment | | | Metals | | | |
|---|---|---|---|---|---|---|---|
| | UV lamp power | [H₂O₂ ] | Recirculation flow-rate | **Co** | **Cu** | **Fe** | **Ni** |
| | W | ppm | (L/h) | % | % | % | % |
| WW3+ HAP₂ | - | - | - | 0 | 5 | 74 | -4 |
| WW3+ UV+ HAP₂ | 95 | 0 | 30 | 5 | 49 | 76 | -8 |
| WW3+ UV/H₂O₂* + HAP₂ | 95 | 200 | 30 | 50 | 100 | 82 | 100 |

| | | | | | | | |
|---|---|---|---|---|---|---|---|
| * : frequency of H₂O₂ injection = 20 min ** : % removal | | | | | | | |

It can be seen in **TABLE 9** that photolysis (UV only) improved slightly the removal in Co but especially in Cu with respectively 5% and 49% removal at the end of the tests. This phenomenon could be explained by the ability of UV to degrade and dissociate complexes containing Cu and Co metals. The UV could also influence the degree of oxidation of the free metal in solution. By modifying the degree of oxidation of these metals, the UV also can modify the metal properties including its precipitation pH for example. However, in these tests with UV only, there was no efficiency on removal of Ni, nor was there any added benefit for the removal of Fe. The removal on Co was still very small. Even though the results with Cu was better with UV, it still was not achieving the results obtained with the peroxygen was used in conjunction with the UV.

Indeed, when H₂O₂ was incorporated into the pretreatment process with UV, the removals in Co, Cu and Ni increased significantly with respectively 50%, 100% and 100%. It is speculated that the activation of H₂O₂ by UV generated radicals and thus accelerated the process of dissociation of metal complexes. Once free in solution, these metals could be easily captured by the apatite adsorbent HAP₂. But in comparison with the improved removal obtained for Cu, Co and Ni, the benefit of using H₂O₂ in the photo-oxidation treatment appeared low for Fe removal.

**TABLE 10**

| **SAMPLES** | Conditions of Treatment | | | Metals | | | |
|---|---|---|---|---|---|---|---|
| | UV lamp power | [H₂O₂] | Recirculation flow rate | **Co** | **Cu** | **Fe** | **Ni** |
| | W | ppm | (L/h) | % | % | % | % |
| WW3+ BHAP₂ | - | - | - | -2 | 93 | 74 | 100 |
| WW3+ UV+ BHAP₂ | 95 | 0 | 30 | 2 | 95 | 82 | 96 |
| WW3+ UV/H₂O₂* + BHAP₂ | 95 | 200 | 30 | 40 | 100 | 100 | 100 |

| | | | | | | | |
|---|---|---|---|---|---|---|---|
| * : frequency of H₂O₂ injection = 20 min ** : % removal | | | | | | | |

In the case of the results obtained with the hydroxyapatite composite with activated carbon (BHAP₂) shown in **TABLE 10,** the same phenomenon as explained above with the hydroxyapatite adsorbent (HAP₂ without A.C.) was observed with BHAP₂, that is to say, there was an increase in the removal % brought in by the addition of H₂O₂ especially for Co but also for Fe.

For the Cu and Ni, there already was a very good removal efficacy with the hydroxyapatite composite with activated carbon (BHAP₂) without the photolysis or H₂O₂ photooxidation, that there was some limited value in performing the UV or UV/H₂O₂ treatment prior to the adsorption with the hydroxyapatite composite with activated carbon (BHAP₂).

For the most stable metal complexes, such as those containing Co, which were not easy to remove by the hydroxyapatite adsorbent or hydroxyapatite composite, it seemed apparent that the addition of H₂O₂ with UV exposure was quite useful to accelerate the kinetics of removal these metal pollutants from ore processing contaminated waters.

### Example 7 (in accordance to the invention)

### Impact of H₂O₂ concentration on UV/H₂O₂ pretreatment of an ore processing water followed by adsorption

Tests were carried out as similarly described in **Example 6.** The concentration in H₂O₂ was varied from 0 to 400 ppm; the UV lamp was a Philips 95W UV-C lamp; the recirculation flow rate was 30 L/hr and the injection frequency of the H₂O₂ into the buffer tank was 20 minutes.

The % removal of targeted metals (Co, Cu, Fe, Ni) in **TABLES 11 & 12** was calculated based on the difference of the initial value of the various metal contents measured by ICP-MS in the ore processing water effluent prior to any treatment and the final value obtained after the adsorption **(TABLE 11** with HAP₂ & **TABLE 12** with BHAP₂) divided by the same initial value. The UV peroxidation step lasted 240 minutes (4 hours), except for the UV peroxidation step with 50 ppm H₂O₂ which was carried out for 180 min (3 hours).

**TABLE 11**

| | [H₂O₂ ] | Metals | | | |
|---|---|---|---|---|---|
| | | **Co** | **Cu** | **Fe** | **Ni** |
| **SAMPLES** | ppm | %** | % | % | % |
| + HAP₂ | - | 0 | 5 | 74 | -4 |
| + UV/H₂O₂* + HAP₂ | 50 | 2 | 49 | 83 | -10 |
| | 100 | 40 | 98 | 76 | 100 |
| | 150 | 48 | 99 | 88 | 100 |
| | 200 | 50 | 100 | 82 | 100 |
| | 400 | 65 | 100 | 100 | 100 |

| | | | | | |
|---|---|---|---|---|---|
| * : UV-C lamp power = 95W; frequency of H₂O₂ injection = 20 min; recirculation flow rate = 30 L/hr ** : % removal | | | | | |

It can be seen from **TABLE 11** that the UV/H₂O₂ pre-treatment significantly improved the recovery of metals when it was followed by an adsorption using the hydroxyapatite adsorbent (HAP₂). This confirmed that the metals were present largely under the complex form in the ore processing water.

By performing a UV/H₂O₂ oxidation before adsorption, one can destabilize the metal complexes, "free" the metals and then remove these 'freed' metals from the water with the adsorbent. It was also noted that the higher the concentration of H₂O₂ used in the UV/H₂O₂ pretreatment, the greater benefit in metal removal is observed, especially for the most stable metal complexes such as those containing Co.

**TABLE 12**

| | [H₂O₂] | Metals | | | |
|---|---|---|---|---|---|
| | | **Co** | **Cu** | **Fe** | **Ni** |
| **SAMPLES** | ppm | %** | % | % | % |
| + HAP₂ | - | 0 | 93 | 59 | 100 |
| + UV/H₂O₂* + BHAP₂ | 50 | 32 | 98 | *** | 93 |
| | 100 | 40 | 99 | 76 | 100 |
| | 150 | 45 | 99 | 82 | 100 |
| | 200 | 40 | 100 | 100 | 100 |
| | 400 | 49 | 100 | 100 | 100 |

| | | | | | |
|---|---|---|---|---|---|
| * : UV lamp power = 95W; frequency of H₂O₂ injection = 20 min; recirculation flow rate = 30 L/hr ** : % removal ***: value omitted due to analytical problem | | | | | |

Looking at **TABLE 12,** similarly to the results obtained with UV/H₂O₂ followed by adsorption with the hydroxyapatite adsorbent (HAP₂), the higher the concentration of H₂O₂, the higher the removal in metals with the hydroxyapatite composite BHAP₂. In the case of BHAP₂, the removals (without UV or UV/H₂O₂ oxidation) were already significant for the following metals: Cu, Fe and Ni, but very poor for Co. Thanks to photo-oxidation by UV/H₂O₂, the metal removal increased significantly to achieve, in the case of the 400 ppm H₂O₂ test, 100% removal for Cu, Fe and Ni and 49% removal for Co.

### Example 8 (in accordance to the invention)

### Impact of UV lamp power on UV/H₂O₂ treatment of an ore processing water followed by adsorption

Tests were carried out as similarly described in **Example 6.** The UV lamps used in the UV/H₂O₂ step were Philips UV-C lamps with either 55W power or 95W power (equivalent in UV-C power of 17W or 27W). The recirculation flow rate was 30 L/hr ; the injection frequency of the H₂O₂ into the buffer tank was 20 minutes; and the concentration in H₂O₂ was 200 ppm. The UV peroxidation step using the recirculation loop lasted 240 minutes (4 hours).

The % removal in **TABLES 13 & 14** was calculated based on the difference of the initial value of the various metal contents measured by ICP-MS in the ore processing water effluent prior to any treatment and the final value obtained after the adsorption (**TABLE 13** with HAP₂ & **TABLE 14** with BHAP₂) divided by the same initial value.

**TABLE 13**

| | UV lamp Power | Metals | | | |
|---|---|---|---|---|---|
| | | **Co** | **Cu** | **Fe** | **Ni** |
| **SAMPLES** | W | %** | % | % | % |
| + HAP₂ | - | 0 | 5 | 74 | -4 |
| + UV/H₂O₂* + HAP₂ | 55 | 24 | 98 | 75 | 100 |
| | 95 | 50 | 100 | 82 | 100 |

| | | | | | |
|---|---|---|---|---|---|
| * : [H₂O₂] = 200 ppm; frequency of H₂O₂ injection = 20 min; recirculation flow rate = 30 L/hr ** : % removal | | | | | |

As shown in **TABLE 13** using the hydroxyapatite adsorbent (HAP₂) after the UV/H₂O₂ treatment, the impact of the UV-C lamp power was significant for the most stable metal complexes such as those with Co. Indeed, in increasing the power of the lamp from 55 W to 95 W (with equivalent UV-C power of 17W to 27W), the removal of Co increased from 24% to 50%.

However, for the metallic complexes which would be considered easier to destabilize with photo-oxidation such as those containing Cu, Ni and Fe, there was a limited added value to the increase in UV lamp power because the removal yield in the end were very similar if not identical.

**TABLE 14**

| | UV lamp Power | Metals | | | |
|---|---|---|---|---|---|
| | | **Co** | **Cu** | **Fe** | **Ni** |
| **SAMPLES** | W | %** | % | % | % |
| + BHAP₂ | - | 0 | 93 | 59 | 100 |
| + UV/H₂O₂* + BHAP₂ | 55 | 14 | 98 | 92 | 100 |
| | 95 | 40 | 100 | 100 | 100 |

| | | | | | |
|---|---|---|---|---|---|
| * : [H₂O₂] = 200 ppm; frequency of H₂O₂ injection = 20 min; recirculation flow rate = 30 L/hr ** : % removal | | | | | |

In the case of the adsorption with the hydroxyapatite composite (BHAP₂) after the UV/H₂O₂ treatment shown in **TABLE 14,** the power of the UV lamp only impacted significantly the removal of Co with a yield that increased from 14% to 40% while the power of the lamp increased from 55W to 95W (with equivalent UV-C power of 17W to 27W). For Cu, Ni and Fe, the removal yields after 240 min of UV/H₂O₂ treatment were comparable with either UV lamp power.

In conclusion, there was a significant influence of the power of the UV lamp on the performance of metal removal when the metal such as Co was in a form (complexes) which was difficult (stable) to break down, but there was no observed influence on metals forming complexes that were less stable, such as Cu, Fe, and Ni.

### Example 9 (in accordance to the invention)

### Impact of time on UV/H₂O₂ treatment of an ore processing water followed by adsorption

All the results presented thus far from Examples 5 to 8 have been compared on the basis of a 240-min time frame for the UV/H₂O₂ treatment.

Tests were carried out as similarly described in Example 7 with either 150 ppm or 200 ppm H₂O₂ over a time period for the UV/H₂O₂ treatment from 60 minutes to 240 minutes, while keeping the adsorption step identical (see **Example** 5 for adsorption conditions). The UV lamp was a Philips 95W UV-C lamp (eq. power 27W for UV-C); the recirculation flow rate was 30 L/hr and the injection frequency of the H₂O₂ into the buffer tank was 20 minutes.

The % removal with HAP₂ and UV/H₂O₂ (using 150 ppm H₂O₂) in **TABLE 15** and with HAP₂ and UV/H₂O₂ (using 200 ppm H₂O₂) in **TABLE 16** was calculated based on the difference of the initial value of the contents of various metal measured by ICP-MS in the ore processing water effluent prior to any treatment and the final value obtained after the adsorption based on the different times by the same initial value, and they are reported in these tables as a function of UV peroxidation time (60-240 min).

**TABLE 15 : Treatment with 150 ppm H₂O₂ over UV/H₂O₂ pretreatment time**

| | UV/H₂O₂ Time | Metals | | | |
|---|---|---|---|---|---|
| | | **Co** | **Cu** | **Fe** | **Ni** |
| **SAMPLES** | min | %** | % | % | % |
| + HAP₂ | - | 2 | 6 | 59 | -2 |
| + UV/H₂O₂* + HAP₂ | 60 | 10 | 97 | 88 | 100 |
| | 120 | 29 | 97 | 88 | 100 |
| | 180 | 36 | 99 | 88 | 100 |
| | 240 | 48 | 99 | 88 | 100 |

| | | | | | |
|---|---|---|---|---|---|
| * : UV lamp power = 95W (eq. 27W UV-C); frequency of H₂O₂ injection = 20 min; recirculation flow rate = 30 L/hr ** : % removal | | | | | |

**TABLE 16 : Treatment with 200 ppm H₂O₂ over UV/H₂O₂ pretreatment time**

| | UV/H₂O₂ Time | Metals | | | |
|---|---|---|---|---|---|
| | | **Co** | **Cu** | **Fe** | **Ni** |
| **SAMPLES** | min | %** | % | % | % |
| + HAP₂ | - | 2 | 6 | 59 | -2 |
| + UV/H₂O₂* + HAP₂ | 60 | 7 | 97 | 88 | 100 |
| | 120 | 29 | 98 | 82 | 100 |
| | 180 | 40 | 99 | 88 | 100 |
| | 240 | 50 | 100 | 82 | 100 |

| | | | | | |
|---|---|---|---|---|---|
| * : UV lamp power = 95W (eq. 27W UV-C); frequency of H₂O₂ injection = 20 min; recirculation flow rate = 30 L/hr ** : % removal | | | | | |

As illustrated in **TABLES 15 and 16,** it was observed that the removal
maxima were obtained after 60 minutes of UV/H₂O₂ treatment for Cu, Fe and Ni. This indicates that the complexes formed by these three metals are easily dissociable via the UV/H₂O₂ treatment to allow the metals recovery by the subsequent adsorption step.

Only Co (as previously observed) required a longer UV/H₂O₂ treatment time in order to obtain a significant improvement in removal efficacy. This provides evidence to the hypothesis that the complexes formed by Co were more difficult to dissociate to free the Co metals. It is also possible that Co may quickly form complexes with degradation by-products of other pollutants in the treated water and in such instances, it would be possible to recover the Co, only when the degradation would be well-advanced.

The disclosure of all patent applications, and publications cited herein are hereby incorporated by reference, to the extent that they provide exemplary, procedural or other details supplementary to those set forth herein.

Should the disclosure of any of the patents, patent applications, and publications that are incorporated herein by reference conflict with the present specification to the extent that it might render a term unclear, the present specification shall take precedence.

In the present application, where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components. Any element or component recited in a list of elements or components may be omitted from such list. Further, it should be understood that elements, embodiments, and/or features of processes or methods described herein can be combined in a variety of ways without departing from the scope and disclosure of the present teaching, whether explicit or implicit herein.

Accordingly, the scope of protection is not limited by the description set out above, but is only limited by the claims which follow, that scope including all equivalents of the subject matter of the claims. Each and every claim is incorporated into the specification as an embodiment of the present invention. Thus, the claims are a further description and are an addition to the preferred embodiments of the present invention.

While preferred embodiments of this invention have been shown and described, modifications thereof can be made by one skilled in the art without departing from the spirit or teaching of this invention. The embodiments described herein are exemplary only and are not limiting. Many variations and modifications of systems and methods are possible and are within the scope of the invention.

## Claims

1. A process for treating a water effluent, preferably originating from a ore mining process, containing cyanide, metallic ions and metal-cyanide complexes having a stability constant K **characterized by** a logK at 25°C greater than 20, preferably greater than 30, more preferably greater than 35, said method comprising:
- irradiating the water effluent at a pH greater than 7.0 with ultraviolet light in the presence of a peroxygen at a selected wavelength to form an irradiated effluent, wherein at least one of said metal-cyanide complexes undergoes photo-dissociation and liberates free cyanide from the complex in order for the free cyanide to be converted to cyanate and for the metal from the complex to be converted to an hydroxide form;
- contacting the irradiated effluent with a solid adsorbent comprising apatite to remove from the irradiated effluent at least part of said metallic ions to form a treated effluent; and
- separating the treated effluent from the solid adsorbent.

2. The process of claim 1, wherein the pH during irradiation is greater than 7 and up to 11, preferably from 8 to 11, more preferably from 8.5 to 10.5, yet more preferably from 9 to 10.5, even more preferably from 9.5 to 10.5, most preferably from 10 to 10.5.

3. The process of claim 1 or 2, wherein the at least one metal-cyanide complex which undergoes photo-dissociation contains a metal in the complex selected from the group consisting of Fe(II), Fe(III), Co(II), Ni(II), Cu(I), Cu(II), and Hg(II), preferably selected from the group consisting of Fe(II), Fe(III), Co(II), Cu(I), and Ni(II).

4. The process of any of the preceding claims, wherein said metal-cyanide complex which undergoes photo-dissociation is selected from the group consisting of hexacyanoferrate(II), hexacyanoferrate(III), hexacyanocobaltate(III), tetracyanonickelate(II), tetracyanocuprate(II), and combinations thereof.

5. The process of any of the preceding claims, wherein during irradiating, the ultraviolet light has a wavelength in the region from 200 to 375 nm, preferably from 200 to 350 nm, more preferably from 200 to 300 nm, most preferably at 254 nm.

6. The process of any of the preceding claims, wherein the peroxygen used during the irradiating step comprises or consists of H₂O₂, and wherein the H₂O₂ is used in a molar ratio H₂O₂:CN of at least 2:1, preferably at least 5:1, more preferably at least 10:1, wherein CN in the ratio is the total cyanide content in the effluent which is free and which can be liberated from metal-cyanide complexes during UV irradiation.

7. The process of any of the preceding claims, wherein the H₂O₂ content in the effluent is from 10 to 1,000 ppm, preferably from 25 to 750 ppm, preferably from 40 to 500 ppm, yet more preferably from 50 to 400 ppm.

8. The process of any of the preceding claims, wherein the solid adsorbent comprises a calcium-deficient hydroxyapatite with a Ca/P ratio more than 1.5 and less than 1.67, preferably wherein the calcium-deficient hydroxyapatite is synthetically made.

9. The process of any of the preceding claims, wherein the solid adsorbent comprises a synthetic hydroxyapatite composite, said synthetic hydroxyapatite composite comprising a hydroxyapatite and at least one additive which is present during the hydroxyapatite synthesis, preferably wherein the at least one additive in the synthetic hydroxyapatite composite is embedded or incorporated into or coated onto the hydroxyapatite.

10. The process of claim 9, wherein the at least one additive comprises at least one activated carbon, iron (such as in the form of metal, salt, oxide, oxyhydroxide, or hydroxide), or combinations thereof.

11. The process of any of the preceding claims, wherein the contacting step with the adsorbent comprising apatite is carried out at a pH from 6.5 to 10, preferably a pH from 7 to 9.5, more preferably a pH from 7 to 9, yet more preferably a pH from 7.2 to 8.8, still more preferably a pH from 7.5 to 8.8, yet still more preferably a pH from 7.5 to 8.5.

12. The process of any of the preceding claims, wherein the contacting step with the adsorbent comprising apatite is carried out by mixing the solid adsorbent in the irradiated effluent with a content from 1 to 10 wt% of solid adsorbent, preferably from 2 to 5 wt% of solid adsorbent.

13. The process of any of the preceding claims, wherein the contacting with the adsorbent a metal is carried out in a mixed tank, and wherein the solid adsorbent is in the forms of particles which are suspended in the irradiated effluent in the mixed tank.

14. The process of any of the preceding claims, wherein the contacting with the adsorbent and the irradiating step are carried out in different units.

15. The process of any of the preceding claims, wherein contacting the irradiated effluent with a solid adsorbent comprising apatite is effective to remove at least part of said ions containing one or more elements selected from the group consisting of Al, Ag, Ba, Be, Ce, Co, Cd, Cu, Cr, Fe, Hg, La, Li, Mn, Mg, Mo, Ni, Pb, Pd, Rb, Sb, Sn, Sr, Th, Ti, U, V, Y, Zn, As, B, F, Se, and combinations thereof.
